# EUROPÄISCHE PATENTSCHRIFT

(11) **EP 3 007 560 B1**
(45) Veröffentlichungstag und Bekanntmachung des Hinweises auf die Patenterteilung: **28.11.2018**
(21) Anmeldenummer: 14727508.5
(22) Anmeldetag: 02.06.2014
(51) Int. Cl.: A21B 5/02, A21D 8/06, A21D 13/45

(54) **VERFAHREN UND VORRICHTUNG ZUR HERSTELLUNG UNTER DRUCK AUSGEBACKENER WAFFELFORMKÖRPER**
METHOD AND DEVICE FOR PRODUCING SHAPED WAFFLE BODIES BAKED UNDER PRESSURE
PROCÉDÉ ET SYSTÈME DE PRODUCTION DE GAUFRETTES MOULÉES CUITES SOUS PRESSION

(30) Priorität: 10.06.2013 AT 4662013
(43) Veröffentlichungstag der Anmeldung: 20.04.2016
(73) Patentinhaber: Haas Food Equipment GmbH, 1210 Wien (AT)
(72) Erfinder: HAAS, Johannes, A-1040 Wien (AT); HAAS, Josef, A-2100 Leobendorf (AT); JIRASCHEK, Stefan, A-2202 Königsbrunn (AT); TIEFENBACHER, Karl, 6067 Absam (AT); BIBARIC, Markus, A-3400 Kierling (AT)
(74) Vertreter: Puchberger & Partner Patentanwälte
(86) Internationale Anmeldenummer: PCT/EP2014/061314
(87) Internationale Veröffentlichungsnummer: WO 2014/198569

(56) Entgegenhaltungen:
- WO-A1-2011/067733
- FR-A- 1 294 856
- GB-A- 2 502 532
- US-A- 2 624 297
- US-A1- 2004 265 453
- US-A1- 2012 003 363

## Beschreibung

Die Erfindung betrifft eine Backplattenvorrichtung, einen Backofen, einen Waffelformkörper sowie ein Verfahren zur Herstellung des Waffelformkörpers.

### Gebiet der Erfindung:

Viele gelockerte Backwaren weisen zwei charakteristische Elemente auf:
1. eine weitgehend geschlossene und glatte Oberfläche, bedingt durch die Ausbildung eine Kruste während des Backens.
2. Eine poröse innere Struktur die auf eine Lockerung durch Triebmittelgase und Wasserdampf zurückgeht.

Beispiele dafür sind Backwaren aus dem Bereich Brot, Gebäck oder Feingebäck, wo durch Ausbilden einer Backhaut und Verkleisterung der Stärke mittels Dampf und Heißluft eine geschlossene, oft auch glatte und glänzende Oberflächenkruste entsteht mit gänzlich anderen Eigenschaften als sie die weiche, poröse Krume im Inneren hat.

Weitere Beispiele mit signifikanten Strukturunterschieden zwischen Oberfläche und Kernbereich sind unter Druck gebackene Waffelbackwaren wie Flachwaffeln, Hohlwaffeln und Waffelbehälter. Hier kommt es im direkten Kontakt mit der heißen Backform unmittelbar beim Ausfüllen der Backform sofort zum Anbacken und zum Entstehen einer weitgehend geschlossen aussehenden Backhaut, während das Waffelinnere zufolge extensiver Wasserdampflockerung eine besonders offene und poröse Struktur aufweist, was auf dem im Vergleich zu anderen Backwaren mit 55 bis 66% besonders hohen Wassergehalt von Waffelbackmassen beruht. Diese wenig dichte, großporige Innenstruktur ist auch verantwortlich für die sehr niedrige Dichte von Flachwaffeln, Hohlwaffeln und Waffelbehältern, die lediglich ca. 0,15 g/cm³ beträgt.

Wird es im Zuge der Weiterverarbeitung gelockerter Backprodukte erforderlich, diese mittels Trennschnitten zu zerteilen, ist im Schnittbereich die offene, poröse Struktur voll sichtbar. Diese weist naturgemäß auch ungünstigere technologische Eigenschaften auf als die geschlossene Außenhaut wie etwa ein stark erhöhtes Krümeln bzw. Ausbrechen oder ein schnelles Aufsaugen flüssiger oder pastöser Komponenten, wenn solche mit dem geschnittenen offenen Backwarenrand kombiniert werden. Weiters das Einschließen von Luft, sodass beim Überziehen mit warmen Glasuren infolge thermischer Ausdehnung ein Platzen der entstehenden Blase erfolgt, was ein unansehnliches Loch im Überzug zurücklässt. Dadurch wird eine wesentliche Schutzfunktion solcher Überzüge, den Zutritt von Luftsauerstoff und/oder Feuchtigkeit zu minimieren, deutlich reduziert.

Die Erfindung betrifft insbesondere ein neues backtechnisches Verfahren zum Herstellen von Hohlkörperwaffelschalen in modifizierten Hohlwaffel- und Flachwaffelbackformen. Nach dem Backvorgang können die gebackenen Hohlkörperwaffelhalbschalen in einem einfachen mechanischen Verfahren abgetrennt werden. Die bisher zum Abtrennen der Hohlkörperwaffelhalbschalen eingesetzten Verfahren wie horizontales Abschneiden, Abschleifen, Abfräsen, Abhobeln oder das vertikale Ausstanzen oder Aussägen sind nicht mehr erforderlich. Gleichzeitig werden mit dem neuen Verfahren auch die technologisch nachteiligen breiten offenporigen porösen Ränder vermieden.

Die Herstellung von gebackenen Waffeln als Flachwaffelblätter, Hohlwaffelblätter, Waffelbecher oder Waffeltüten in geschlossenen Metallbackformen mit Ausdampföffnungen ist seit langem Stand der Technik. Alle diese Produkte haben jedenfalls 2 charakteristische Merkmale gemeinsam.
1. Eine weitgehend geschlossene Backhaut an allen Außenseiten
2. Eine weitgehend homogene Waffeldicke im Bereich von durchgehend etwa 0,5 mm bis zu etwa 5 mm, letzteres, wenn der durchgehende Kernbereich der typischerweise 0.5 bis 2 mm dick ist, durch Gravuren erweitert wird.

### Ad 1. Geschlossene Backhaut an den Außenseiten oder offener, großporiger Rand

Die beim Waffelbacken erhaltenen Produkte weisen auf allen Seiten, auch an den schmalen Rändern, eine dichtere, glatte geschlossene Backhaut auf, allenfalls mit kleinen Öffnungen, welche die Dampfaustrittsöffnungen markieren. Diese Produkte weisen also alle einen gebackenen und damit optisch weitgehend geschlossenen Rand auf.

Daneben haben sich etwa für die Herstellung von Waffelpralinen im Laufe der Jahre Verfahren etabliert, bei denen nach dem Backen der Hohlwaffelblätter durch entweder horizontales Abschneiden, Abschleifen, Abfräsen, Abhobeln oder durch vertikales Ausstanzen oder Aussägen der Backzusammenhang zwischen den als Waffelhalbschalen verbleibenden Hohlformen entfernt wird. Die so erhaltenen Waffelhalbschalen weisen dann im Trennbereich einen den ganzen Waffelquerschnitt umfassenden offenen, großporigen Rand ohne die geschlossene Backhaut auf. Solche offenen Ränder sind zum einen optisch unansehnlich, zum anderen haben sie naturgemäß ungünstigere technologische Eigenschaften als die geschlossene Außenhaut. So etwa ein stark erhöhtes Krümeln bzw. Ausbrechen oder ein schnelles Aufsaugen flüssiger oder pastöser Komponenten, wenn solche mit dem geschnittenen offenen Backwarenrand kombiniert werden. Weiters das Einschließen von Luft, sodass beim Überziehen mit warmen Glasuren infolge thermischer Ausdehnung ein Platzen der entstehenden Blase erfolgt, was ein unansehnliches Loch im Überzug zurücklässt. Dadurch wird eine wesentliche Schutzfunktion solcher Überzüge, den Zutritt von Luftsauerstoff und/oder Feuchtigkeit in der Aufbrauchsfrist zu minimieren, deutlich reduziert.

Aus wirtschaftlichen Gründen ist diese zweite Technik der offenen Ränder weit verbreitet, da das Einzelbacken von Hohlkörperwaffelhalbschalen mit geschlossenen Rändern im Vergleich zum Backen in Hohlwaffelblättern eine große Anzahl einzelner Backformen braucht, was einen signifikant höheren Investitions- und Platzbedarf zur Folge hat.

### Ad 2. Homogene Waffeldicke mit 1 bis 2 mm Kernbereich, bis 5 mm Gesamtstärke über Gravuren

Die Waffel(blatt)dicke legt auch die Größe des offenen Randes fest. Stand der Technik ist eine homogene Dicke. Gemäß Stand der Technik wird ein Backzusammenhang in Normalstärke für das Abführen der hohen Wasseranteile von 55 bis 65% in den Waffelbackmassen als Dampf für notwendig erachtet. Als Backzusammenhang wird bei Hohlwaffelblättern das Waffelmaterial verstanden, das sich im Waffelblatt z.B. zwischen den Hohlkörperwaffelhalbschalen befindet.

Dem Stand der Technik sind Vorrichtungen, insbesondere Backöfen zur Herstellung von knusprig spröden Flachwaffeln oder Hohlwaffeln zu entnehmen. Bei diesen Öfen werden auf- und zuklappbare Backzangen durch einen beheizten Backraum eines Backofens geführt. Die knusprig spröde Konsistenz der Backprodukte resultiert aus dem Effekt, dass Backmassen oder Teige mit hohem Wasseranteil von etwa 50-70% unter hohem Druck ausgebacken werden. Dabei entweicht das Wasser der Backmasse in Form von Wasserdampf sehr rasch und hinterlässt dabei eine poröse, spröde Struktur. Um den Backprozess unter hohem Druck durchführen zu können, ist eine Verriegelungsvorrichtung vorgesehen. Über diese kann die Backzange verriegelt werden, sodass sich im Inneren ein Überdruck aufbauen kann. Nur durch diesen Überdruck kann der gewünschte Backverlauf erzielt werden.

Zwischen Ober- und Unterplatte muss genügend Freiraum bestehen, damit der Dampf seitlich aus der Backzange entweichen kann. Der Dampf wird gemäß Stand der Technik im Inneren des Waffelformkörpers nach außen geleitet. Die an der beheizten Backfläche anliegende Schicht des Waffelformkörpers erfährt beim Ausbacken nahezu keine Dampfdiffusion. Dadurch entsteht im Kontaktbereich zwischen der Backplatte und dem Waffelformkörper eine im Wesentlichen geschlossene und glatte Oberfläche. Diese Oberfläche ist im Vergleich zur porösen, großporigen Innenstruktur beispielsweise des Kerns der Waffel kleinporiger und dadurch einerseits optisch ansprechender und andererseits widerstandsfähiger gegen das Eindringen von Feuchtigkeit oder anderen migrierenden Stoffen.

Bei der Herstellung knusprig spröder Waffeln besteht ein sehr sensibler Zusammenhang zwischen der Zusammensetzung der Backmasse, der Backtemperatur, der Backdauer und insbesondere der Dicke des Waffelblattes. Je dünner das Waffelblatt ist, desto schneller ist dieses ausgebacken. Bei Überbacken von Waffelblättern kommt es zu einer ungewünschten Braun-Verfärbung sowie zu einer übermäßig spröden, trockenen Konsistenz der Waffel. Da das gesamte Waffelblatt in einer einzigen Backzange durch den Backraum geführt wird, besteht keine Möglichkeit, unterschiedliche Backzonen unterschiedlichen Temperaturen auszusetzen. Aus diesem Grund werden gemäß Fachwissen Waffelblätter ausschließlich mit weitgehend konstanter Dicke hergestellt. Dies bedeutet, dass zumindest die Kerndicke des Waffelblattes über die gesamte Fläche in etwa konstant ist. Bei herkömmlichen Waffelblättern kann eine reliefartige Struktur, insbesondere eine Waffelgravur vorgesehen sein.

Üblicherweise werden die Waffelformkörper im Anschluss an das Backverfahren in einem Trennvorgang zerschnitten und vorher gegebenenfalls mit Cremen wie beispielsweise Schokoladecremen gefüllt. Durch das Zerschneiden der Waffelblätter wird das Waffelblatt im Schnittbereich geöffnet, sodass eine poröse großporige Fläche nach außen weist. Diese Fläche weist die obengenannten Nachteile auf. Insbesondere kann durch die Poren Feuchtigkeit eindringen, was in weiterer Folge dazu führt, dass die Waffel ihre knusprig spröde Textur verliert und insbesondere zäh oder weich wird.

Herkömmliche Vorrichtungen sind unter anderem aus der WO 2011/067733 A1, der FR 1 294 856 A, der US 2012/0003363 A1 und der US 2 624 297 A bekannt.

Aus der angeführten WO 2011/067733 A1 sind eine Vorrichtung und ein Verfahren für die Produktion von Backprodukten in der Form von Halbschalen bekannt, wobei der Teig in einem ersten Schritt unter Druck partiell ausgebacken und in einem zweiten Schritt bei geöffneten Backplatten fertig ausgebacken wird, um die gewünschten Produkteigenschaften zu erzielen. Nachteilig an dieser Vorrichtung ist aber, dass bei der Produktion der Backprodukte große Backabfallmengen entstehen.

Aus der angeführten US 2012/0003363 A1 sind eine Vorrichtung und ein Verfahren zur Herstellung von essbaren Brotbechern bekannt, wobei in den Blechen der Vorrichtung Luftauslassöffnungen vorgesehen sind. Durch diese Luftauslassöffnungen kann der entstehende Dampf während des Ausbackens aus der Vorrichtung entweichen, um einen Druckaufbau in den dünnwandigen Backformen zu verhindern.

Aufgabe der Erfindung ist es nun, ein Backprodukt zu schaffen, das eine im Wesentlichen geschlossene glatte Oberfläche besitzt. Insbesondere ist es Aufgabe der Erfindung ein Backprodukt zu schaffen, bei dem die Fläche mit großporiger, poröser Struktur minimiert ist. Eine weitere Aufgabe der Erfindung ist es, ein derartiges Produkt effizient herzustellen. Dies beinhaltet, dass das Backprodukt auf herkömmlichen Backöfen zur Herstellung von knusprig-spröden Waffeln herstellbar ist. Ferner bedeutet dies, dass der Verschnitt, z.B. der abzutrennende Backzusammenhang minimiert ist und dass eine hoher Durchsatz bei der Produktion erzielbar ist. Dies umfasst bevorzugt, dass in einer Backzange gleichzeitig mehrere Backprodukte hergestellt werden können.

Die erfindungsgemäße Aufgabe wird durch die Merkmalskombination der unabhängigen Patentansprüche gelöst.

Die erfindungsgemäße Backplattenvorrichtung, nämlich die erfindungsgemäße Backzange, mit einem Backplattenpaar, zur Herstellung unter Druck ausgebackener Waffelformkörper, wie insbesondere spröde Flachwaffeln oder Hohlwaffeln, aus einem Waffelteig umfasst bevorzugt eine erste Backplatte mit einer ersten Backfläche, eine zweite Backplatte mit einer zweiten Backfläche, eine Bewegungsvorrichtung, über welche die erste Backplatte mit der zweiten Backplatte öffen- und schließbar verbunden ist, eine Verriegelungsvorrichtung zur Verriegelung der erste Backplatte mit der zweiten Backplatte in geschlossener Stellung, wobei in geschlossener Stellung durch die erste Backfläche und die zweite Backfläche eine Backform gebildet ist, die im Wesentlichen der Negativform des Waffelformkörpers entspricht, und wobei die Backform einen Produktraum mit einer Produktdicke umfasst, der von einem Spaltabschnitt mit einer Spaltdicke umgeben ist, wobei die Spaltdicke kleiner ist als die Produktdicke, wobei zumindest ein Kanal mit einer Kanaldicke zur Dampfableitung vorgesehen ist, der den Spaltabschnitt durchsetzt, wobei die Kanaldicke größer ist, als die Spaltdicke. Bevorzugt sind in einer Backplattenvorrichtung mehrere Produkträume vorgesehen.

Weitere erfindungsgemäße Merkmale können sein, dass sich der Kanal von dem Produktraum bis zur Außenseite der Backplatte oder des Backplattenpaars erstreckt und dadurch den Produktraum nach außen öffnet, dass zwei oder mehr Produkträume vorgesehen sind, und dass sich der Kanal von einem Produktraum zu einem weiteren Produktraum erstreckt und dadurch zwei Produkträume miteinander verbindet, dass der Kanal den Spaltabschnitt entlang der ersten Backfläche und/oder entlang der zweiten Backfläche durchsetzt, dass der Kanal als linienförmige Gravur in einer oder in beiden Backflächen vorgesehen ist, wobei die linienförmige Gravur zumindest einen Spaltabschnitt kreuzt, dass der Spaltabschnitt eine Spaltdicke aufweist, die weniger als 50% der Produktdicke, bevorzugt weniger als 30% der Produktdicke, beträgt, dass die Spaltdicke zumindest abschnittsweise Null ist, dass sich der Spaltabschnitt flächig zwischen den Produkträumen und/oder zwischen einem Produktraum und der Außenseite des Backplattenpaars erstreckt, dass zwei Produkträume über einen Spaltabschnitt miteinander verbunden sind, dass mehrere Kanäle in einen Produktraum münden, dass mehrere Kanäle im Spaltabschnitt zusammengeführt sind, dass mehrere Kanäle im Wesentlichen regelmäßig am Umfang des Produktraumes verteilt in den Produktraum münden, dass die Kanäle schräg zueinander verlaufen, sodass der gebackene Waffelformkörper eine stabile Struktur aufweist, und/oder dass im Produktraum ein im Wesentlichen geschlossener, den Produktraum einschnürender Kamm vorgesehen ist, sodass der gebackene Waffelformkörper eine Sollbruchlinie zur Trennung des Backproduktes von dem Backzusammenhang aufweist.

Der Waffelformkörper, insbesondere das Backzwischenprodukt, aus einer unter Druck ausgebackenen, im unausgebackenen Zustand bevorzugt und/oder etwa 55-70% Wasser enthaltenden Backmasse, umfassend ein Backprodukt mit einer Backproduktdicke, das von einem Backzusammenhang umgeben ist, ist erfindungsgemäß derart ausgeführt, dass der Backzusammenhang zumindest eine Rippe umfasst, die sich bis zum Rand des Backprodukts erstreckt, und dass sich die Rippe von dem Backprodukt bis an den Rand des Waffelkörpers erstreckt und dass der Waffelformkörper durch eine erfindungsgemäße Backplattenvorrichtung hergestellt ist.

Weitere vorteilhafte Merkmale können sein, dass der Backzusammenhang eine Verbindungslamelle mit einer Lamellendicke umfasst, dass die Lamellendicke zumindest 50% kleiner ist als die Backproduktdicke, bevorzugt zumindest 70% kleiner ist als die Backproduktdicke oder gegebenenfalls zumindest abschnittsweise Null ist, dass die Rippe in der Fläche oder in der der Verbindungslamelle verläuft, dass mehrere Rippen vorgesehen sind, die im Wesentlichen regelmäßig am Umfang des Backproduktes verteilt in das Backprodukt münden, dass eine das Backprodukt umgebenden Sollbruchlinie vorgesehen ist, die eine geringere Dicke aufweist als das Backprodukt, dass mehrere Backprodukte vorgesehen sind, die durch den Backzusammenhang miteinander verbunden sind, dass zumindest eine Rippe vorgesehen ist, die zwei Backprodukte miteinander verbindet, dass das Backprodukt eine Backproduktdicke von etwa 0,5 mm bis 5 mm aufweist, wobei der durchgehende Kernbereich eine Dicke von etwa 0,5 mm bis 2 mm aufweist und/oder dass die Bereiche geringerer Dicke wie insbesondere die Verbindungslamelle und/oder die Sollbruchlinie einen höheren Ausbackgrad aufweisen als das Backprodukt, und insbesondere überbacken sind, und/oder dass die Bereiche mit höherem Ausbackgrad spröder sind als das Backprodukt. Bevorzugt enthält ein Waffelformkörper mehrere Backprodukte.

Der erfindungsgemäße Backofen zum Herstellen von vorzugsweise knusprig-spröden gebackenen Waffelformkörpern, kann derart ausgeführt sein, dass der Backofen einen Backraum und eine im Backofen kontinuierlich umlaufende und sich durch den Backraum bewegende, endlose Backzangenkette besitzt, die längs einer in sich geschlossenen Umlaufbahn angeordnet ist, die sich in zwei übereinander angeordneten Transportebenen erstreckt, wobei die Backzangenkette auf- und zuklappbare und im geschlossenen Zustand verriegelbare Backzangen enthält, in denen aus Backformoberteilen und Backformunterteilen bestehende Backformen angeordnet sind, die durch Aufklappen der Backzangen geöffnet und durch Zuklappen der Backzangen geschlossen werden, wobei eine Einrichtung zum Aufklappen der Backzangen, eine Ausgabestation, eine Beschickungsstation, eine Einrichtung zum Zuklappen der Backzangen und eine Verriegelungsvorrichtung des zur Verriegelung der Backzangen im geschlossenen Zustand in Laufrichtung der Backzangen hintereinander angeordnet sind, wobei in der Ausgabestation eine die gebackenen Waffelformkörper aus den aufgeklappten Backzangen entnehmende Produktabnahmevorrichtung vorgesehen ist, und dass die Backzange als Backplattenvorrichtung nach der vorangegangenen Beschreibung ausgeführt ist.

Das erfindungsgemäße Verfahren zur Herstellung von knusprig-spröden gebackenen Produkten umfassend insbesondere folgende Schritte:
Dosieren von Waffelbackmassen insbesondere im Linienaufguss oder mit zentral orientierten Punktaufgüssen in die Backform einer erfindungsgemäßen Backplattenvorrichtung eines erfindungsgemäßen Backofens,
Backen und Entformen der erfindungsgemäßen Waffelformkörper durch insbesondere Ausblasen und Herausführen oder Vakuumabnahmeverfahren,
Trennen des Backproduktes von dem Backzusammenhang entlang der Sollbruchlinie, und/oder gegbenenfalls, dass der Waffelformkörper zur Trennung des Backproduktes von dem Backzusammenhang einer Trennvorrichtung zugeführt wird, die eine Trennform umfasst, die den Waffelformkörper zumindest im Bereich der Sollbruchlinien berührt, und/oder dass anschließend die Backprodukte von einem oder mehreren Stempeln, die eine Relativbewegung zwischen Backprodukt und Backzusammenhang bewirken, getrennt werden.

Gemäß einem Vorurteil der Fachwelt ist es nicht möglich in einem herkömmlichen Backprozess Waffelblätter herzustellen, bei denen die Bereiche des Backproduktes dicker ausgeführt sind als die Bereiche zwischen den Backprodukten. Die vorherrschende Fachmeinung ist, dass der Dampf bei dünnerem Backzusammenhang nicht schnell genug vollständig aus den Backprodukten entweichen kann.

Bei dem erfindungsgemäßen Verfahren in der erfindungsgemäßen Vorrichtung wird ein Waffelformkörper hergestellt. Der Waffelformkörper ist gegebenenfalls ein Zwischenprodukt zur Herstellung eines Backproduktes. Der Waffelformkörper umfasst zumindest ein Backprodukt, das von einem Backzusammenhang umgeben ist. Gegebenenfalls können mehrere Backprodukte vorgesehen sein, die jeweils von einem Backzusammenhang umgeben und insbesondere durch den Backzusammenhang verbunden sind.

Das Backprodukt weist eine Backproduktdicke auf. Der Backzusammenhang umfasst zumindest eine, bevorzugt mehrere Rippen und zumindest eine, bevorzugt mehrere Verbindungslamellen. Die Verbindungslamellen weisen eine Lamellendicke auf, die geringer ist als die Backproduktdicke des Backproduktes. Das Backprodukt ist somit von dünn ausgeführten Verbindungslamellen umgeben. Insbesondere sind somit die Oberflächen des Backproduktes im Randbereich zusammengeführt und verlaufen als Oberfläche der Verbindungslamellen weiter. Durch die dünne Ausführung der Lamelle ist bei Abtrennen des Backzusammenhangs die offenporige Trennfläche geringer. Bei sehr dünner Ausgestaltung der Verbindungslamelle kann der Flächeninhalt der offenporigen Trennfläche nahezu Null betragen, wodurch eine vollständig geschlossene Oberfläche im Bereich des Übergangs zwischen Verbindungslamelle und Backprodukt besteht.

Die Herstellung des erfindungsgemäßen Waffelformkörpers wird durch die erfindungsgemäße Backplattenvorrichtung ermöglicht. Die Backplattenvorrichtung, die als Backzange mit einem Backplattenpaar ausgebildet ist, umfasst eine erste Backplatte mit einer ersten Backfläche und eine zweite Backplatte mit einer zweiten Backfläche. Beide Backplatten sind durch eine Bewegungsvorrichtung miteinander verbunden, sodass die erste Backplatte mit der zweiten Backplatte öffen- und schließbar verbunden ist. Ferner umfasst die Backplattenvorrichtung eine Verriegelungsvorrichtung zur starren Verbindung der ersten Backplatte mit der zweiten Backplatte in geschlossener Stellung. Insbesondere ist die Verriegelungsvorrichtung dazu eingerichtet, eine Öffnung der ersten Backplatte gegenüber der zweiten Backplatte bedingt durch den hohen Druck des ausströmenden Dampfes zu verhindern.

Durch Zusammenklappen und Schließen der Backplatten ist durch die beiden Backflächen eine Backform gebildet. Diese Backform entspricht im Wesentlichen einem Hohlraum, der durch die Backmasse z.B. den Waffelteig gefüllt wird. Die Backform entspricht im Wesentlichen einer Negativform des zu bildenden Waffelformkörpers.

Die Backform umfasst mehrere Abschnitte:
Einerseits umfasst die Backform einen Produktraum mit einer Produktdicke. Dieser Produktraum entspricht im Wesentlichen der Negativform des zu bildenden Backproduktes. Die Produktdicke ist im Wesentlichen konstant über den gesamten Verlauf des Produktraumes, sodass ein gleichmäßig ausgebackenes Produkt entsteht. Leichte Abweichungen der Produktdicken sind jedoch möglich.

Ferner umfasst die Backform einen Spaltabschnitt mit einer Spaltdicke. Die Spaltdicke ist erheblich geringer als die Produktdicke. Der Spaltabschnitt umgibt den Produktraum. Insbesondere erstreckt sich der Spaltabschnitt flächig um den Produktraum herum. Durch die stark verringerte Dicke des Spaltabschnitts gegenüber dem Produktraum muss eine Vorkehrung zur Abführung des beim Backen austretenden Wasserdampfs vorgesehen werden.

Dazu umfasst die Backform Kanäle zur Dampfableitung. Diese Kanäle sind insbesondere als Gravuren in einer oder in beiden Backplatten ausgeführt. Diese Kanäle durchsetzen den Spaltabschnitt. Dies bedeutet, dass sich die Kanäle von dem Produktraum weg erstrecken. Insbesondere erstrecken sich die Kanäle bis zur Außenseite der Backplattenvorrichtung, sodass der Dampf nach außen entweichen kann. Gemäß einer weiteren Ausgestaltung der Erfindung können die Kanäle auch als Bohrungen ausgeführt sein.

Sind mehrere Produkträume in der Backform vorgesehen, so können die Kanäle auch von Produktraum zu Produktraum reichen und damit zwei Produkträume verbinden. Jedoch ist bevorzugt jeder Produktraum mit einem Kanal verbunden, der nach außen führt.

Durch die erfindungsgemäße Ausgestaltung der Backplatten und des Waffelformkörpers wird das Vorurteil der Fachwelt überwunden, dass das Waffelblatt im Wesentlichen eine konstante Kerndicke aufweisen muss. Dies wird insbesondere dadurch erreicht, dass die dünner ausgeführten Bereiche zwischen den Backprodukten von Kanälen zur Dampfableitung durchsetzt sind.

Die Kanäle der Backform bewirken jedoch einen weiteren Vorteil der Erfindung. So wird durch die Kanäle im Waffelformkörper eine Rippe gebildet. Diese Rippe dient einerseits der Ableitung des Dampfes beim Ausbacken und darüber hinaus als versteifendes Element des fertig ausgebackenen Waffelformkörpers.

Der Waffelformkörper wird nach dem Backvorgang aus der Backzange entnommen. Bevorzugt sollte der Waffelformkörper bei der Entnahme in einem Stück bleiben und nicht zerbrechen. Zur Erhöhung der Stabilität des Waffelformkörpers sind, wie angemerkt, Rippen vorgesehen. Diese Rippen sind in bevorzugter Weise derart angeordnet, dass keine unbeabsichtigten Sollbruchstellen entstehen. Dazu sind die Rippen insbesondere schräg zueinander, einander kreuzend und/oder vernetzt angeordnet.

Eine bevorzugte Form der Entnahme ist ein gezieltes Erfassen der gebackenen Körper mittels Vakuumabsaugung sowie deren Herausführen aus dem Backraum und Ablegen auf ein Transportband in bekannter Weise.

Zur effizienten Dampfableitung können mehrere Kanäle in einen Produktraum münden. Insbesondere können mehrere Kanäle regelmäßig am Umfang verteilt in den Produktraum münden. Dadurch kann der Druck bzw. der Wasserdampf gleichmäßig und/oder zu gleichen Teilen in mehrere Richtungen entweichen. Die Kanäle können im Bereich des Spaltabschnittes zusammengeführt sein und in Form dickerer Sammelleitungen nach außen führen. Diese dickeren Sammelleitungen bewirken wiederum dickere Rippen. Diese tragen weiters zur Erhöhung der Stabilität des Waffelformkörpers bei.

Die Spaltschnitte mit geringer Spaltdicke bilden am Waffelformkörper eine Verbindungslamelle. Diese umgibt das Backprodukt. In der Verbindungslamelle und/oder in der Fläche der Verbindungslamelle verlaufen Rippen. Die Verbindungslamelle weist eine Lamellendicke auf, die signifikant geringer ist als Backproduktdicke des Backprodukts. Dadurch ist die Verbindungslamelle bei herkömmlichem Backvorgang überbacken. Durch das Überbacken der Lamelle ist diese spröder und instabiler als das Backprodukt. Durch diese Instabilität kann die Verbindungslamelle in vorteilhafter Weise leichter vom Backprodukt getrennt werden.

Durch den Übergang des relativ dicken Backproduktes zur relativ dünnen Lamelle ist in diesem Bereich eine Sollbruchstelle und/oder eine Sollbruchlinie gebildet. Entlang dieser Linie kann eine einfache Trennung des herzustellenden Backproduktes von dem Backzusammenhang erreicht werden.

Gegebenenfalls umfassen die Backplatten bzw. der Produktraum in seinem Randbereich einen einschnürenden Kamm, der beim Backen eine Sollbruchlinie im Waffelformkörper bildet. Dieser ist bevorzugt im Wesentlichen umlaufend geschlossen und definiert den Seitenrand des herzustellenden Backproduktes.

Die Kanäle können dabei in den Bereich außerhalb des einschnürenden Kamms münden oder auch den Kamm durchsetzen. In beiden Fällen münden die Kanäle definitionsgemäß in den Produktraum.

Zur Trennung der Backprodukte von dem Backzusammenhang kann gemäß der vorliegenden Erfindung der Waffelformkörper aus der Backzange entnommen werden und in einem weiteren Schritt einer Trennvorrichtung zugeführt werden. In dieser Trennvorrichtung wird der Waffelformkörper platziert. In weiterer Folge werden die Backprodukte vom Backzusammenhang getrennt. Dies geschieht beispielsweise durch Relativbewegung des Backzusammenhangs und des Produktes. Dazu kann beispielsweise der Waffelformkörper auf einer Form platziert werden, die den Waffelformkörper insbesondere im Bereich der Sollbruchlinien berührt. Durch einen Stempel kann dann der Backzusammenhang entfernt werden. Alternativ dazu kann der Stempel auch die Backprodukte selbst bewegen, um sie aus dem Backzusammenhang zu brechen.

Die Erfindung betrifft insbesondere ein Backverfahren für Backprodukte wie z.B. Hohlwaffelhalbschalen das erstens die optisch und technologisch störenden breiten großporigen Ränder vermeidet und zweitens die Backprodukte wie z.B. Hohlwaffelhalbschalen mechanisch leicht abtrennbar macht. Die mit dem neuen Verfahren verbundenen Erkenntnisse werden nun im Detail erläutert Überraschenderweise wurde gefunden, dass für das Ausbacken von Waffelformkörpern wie z.B. Waffelblättern, d.h. das schnelle Entfernen des in der Backmasse enthaltenen Wassers innerhalb der üblichen kurzen Backzeiten von etwa 2 Minuten es gar nicht erforderlich ist den gesamten Backzusammenhang zwischen den Backprodukten wie z.B. Hohlkörperwaffelhalbschalen oder die Trennstege bei Figuren in Flachwaffelblättern dicker oder zumindest gleich dick auszuführen wie die Dicke der Backprodukte. Im Stand der Technik wird bisher angenommen dass dies zum schnellen Abführen des Wasserdampfes jedenfalls erforderlich ist.

Dieser Backzusammenhang kann erfindungsgemäß sehr dünn ausgeführt sein, im Bereich einer Dicke von wenigen 0,1 mm. Dies aber nur dann, wenn dickere Kanäle wie Materialbrücken, Gravurlinien oder Stege im Backzusammenhang vorhanden sind, von denen einzelne auch bis zum Rand der Backprodukte reichen. Dies wird dadurch erreicht, dass in der ersten Backphase diese Kanäle z.B. die Gravurlinien als dickere Stellen für das Abführen der Hauptmenge des Wasserdampfes während der Dampfdruckspitze bereits hinreichend sind. Die Dampfdruckspitze tritt bekanntlich ca. 10 bis 15 Sekunden nach dem Verschließen einer Waffelblattbackform auf und dauert etwa 20 bis 30 Sekunden. In dieser Phase entweicht der Großteil des aus dem Wasseranteil der Backmasse entwickelten Wasserdampfs. Das Backen von Backprodukten wie z.B. Hohlwaffelhalbschalen mit sehr guter Ausprägung und niederer Restfeuchte mit so dünnen Backzusammenhängen im Waffelblatt widerspricht völlig den Erwartungen der Fachwelt.

Der dünne Backzusammenhang wird überdies als Folge der lokal geringen Materialmenge deutlich überbacken, was auch an der stärkeren Bräunung erkennbar ist. So ein Überbacken ist mit einer extremen Brüchigkeit verbunden. Dieser Umstand vereinfacht das Abtrennen der normal dicken Backprodukte wie z.B. Hohlwaffelhalbschalen oder Flachwaffelfiguren vom Backzusammenhang bzw. an den Trennlinien nach dem Entformen signifikant. Kontrollierter leichter mechanischer Gegendruck an den Konturen reicht bereits für ein sauberes Trennen.

In Abhängigkeit vom Querschnitt der Kanäle oder der Rippen ist trotzdem ein Entformen der Blätter als Ganzes nach dem Backen über Schwerkraft möglich. Bevorzugt wird aber mit Hilfe der Vakuummethode entformt.

Die fertig getrennten Backprodukte weisen gemäß einer bevorzugten Ausführungsform nur eine dünne optisch nicht auffällige offene Randlinie auf. Solcherart hergestellte Hohlwaffelhalbschalen sind daher auch direkt als Einzelbehälter einsetzbar.

Mit der gleichen Technik werden auch vorgeformte Flachwaffelstücke mit nach dem Trennen der Stücke bzw. Abtrennen allfälliger Backzusammenhänge optisch weitgehend geschlossenem Rand hergestellt.

In weiterer Folge wird das erfindungsgemäße Verfahren anhand zweier Ausführungsformen weiter beschrieben:

### Erstes Verfahrensbeispiel: Hohlwaffelhalbschalen mit geschlossenem Rand

a. Bereitstellen von Hohlwaffelbackformen für herkömmliche Hohlwaffelblatt-Backautomaten bei denen der sogenannte Backzusammenhang zwischen den ein, zwei oder mehreren in einer Backplatte angebrachten Hohlwaffelformen signifikant dünner ausgeführt ist als bisher üblich, das heißt um mehr als 50% dünner, bevorzugt um mehr als 70% dünner. Der Spaltabschnitt für den Backzusammenhang kann auch so dünn ausgeführt werden, dass im Backzusammenhang nach dem Backvorgang bereits Löcher auftreten. Eine Bedingung für die erfindungsgemäße Hohlwaffelbackform ist, dass im Backzusammenhang einzelne Kanäle bzw. Gravurlinien vorhanden sind welche bis an den Rand des Produktraumes bzw. der Hohlwaffelformen reichen und so die Funktion des Abführens der Dampfdruckspitze im ersten Teil des Backvorganges erfüllen. Optional sind zur mechanischen Stabilisierung des Backzusammenhanges für das leichte Entformen der fertig gebackenen Waffelblätter weitere, gegebenenfalls auch tiefere Kanäle bzw. Gravurlinien und Rippen bzw. Stege vorhanden mit der Eigenschaft, dass sie nicht ganz an den Produktraum bzw. an die Hohlwaffelhalbschalenform heranreichen.
b. Hinsichtlich der Backmassen gibt es keine Einschränkungen. Es finden alle konventionellen Backmassen für Hohlwaffeln Verwendung.
c. Die Backmasse wird für kleinteilige Hohlwaffelbackkörper wie etwa für Pralinen in bekannter Weise in Linienform dosiert. Das Aufbringen auf die Kuppenmitte der einzelne Hohlformreihen ist bevorzugt, um eine gute Ausformung zu erreichen. Sind wenige, größere Hohlwaffelstrukturen zu backen, wird bevorzugt zentral auf die jeweiligen Hohlwaffelformen dosiert.
d. Die Backbedingungen am Waffelbackautomaten unterscheiden sich nicht signifikant von denen bekannter Hohlwaffelbackplatten, sodass vom Fachmann die Backtemperatur und die Backzeit nach seiner Erfahrung leicht einzustellen sind und diese mit den konventionellen Bedingungen vergleichbar sind.
e. Das Entformen der gebackenen Hohlwaffelhalbschalen und des Backzusammenhangs erfolgt nach einem der bekannten Verfahren entweder mittels Schwerkraft und konventionellem Herausführen der Blätter oder aber mittels deren Vakuumabnahme.
f. Die entformten Produktblätter werden für die weiteren Produktionsschritte in Aufnahmeträger eingebracht, welche den Konturen der Blätter und den enthaltenen Hohlwaffelhalbschalen entsprechen. Die Hohlwaffelhalbschalen sind dabei mit eindeutiger Orientierung fixiert, entweder mit der hohlen Seite nach oben (bevorzugt) oder aber der erhabenen Seite nach oben. Durch Anpressen einer, die Konturen der Hohlwaffelhalbschalen exakt nachbildenden Gegenplatte erfolgt ein sauberes Abtrennen des Backzusammenhangs, der in der Folge über eines der bekannten Verfahren wie etwa Abstreifen, Abnehmen mit Vakuum, Abblasen entfernt wird, wobei die Hohlwaffelhalbschalen gegebenenfalls mittels Vakuum im Aufnahmeträger gehalten werden.
g. Die anschließenden Prozessschritte können umfassen: Ein Beschichten, Auflegen eines Creme- oder Schokoladefilms, Dosieren oder Einstreichen von Massen. Weiters das Einlegen kleinstückiger Elemente wie etwa von Nüssen, Trockenfrüchten, aber auch von extrudierten oder gebackenen Stücken wie Crispies oder Keksen. In der Folge wird in bekannter Weise mit einem zweiten ähnlich behandelten Hohlwaffelkörper kombiniert oder aber die flache offene Seite der gefüllten Hohlwaffelhalbschale durch Einlegen passender Flachwaffelstücke abgedeckt bzw. mit Überzügen, Dekors etc. fertig gestellt und sodann einer Kühlung und Verpackung zugeführt.

### Zweites Verfahrensbeispiel: Flachwaffelstücke mit geschlossenem Rand

In analoger Weise zum beschriebenen Vorgang des Backens von Hohlwaffelhalbschalen mit weitgehend geschlossenem Rand werden Flachwaffelstücke vordefinierter Form mit weitgehend geschlossenem Rand hergestellt.

Dabei gibt es die Option, in der Flachwaffelbackform lediglich die Randkonturen im Bereich einer Dicke von wenigen 0,1 mm auszuführen. Es ist dabei aber erforderlich, dass Kanäle wie z.B. Materialbrücken, Gravurlinien, Rippen oder Stege diese Randkonturen überbrücken bzw. durchsetzen. Das Endergebnis ist einem zertrennbaren Puzzle ähnlich.

Falls die gewünschten Figuren sich nicht als geschlossene Struktur in der Flachwaffelbackplatte darstellen lassen, ist analog zur Situation bei den Hohlwaffelhalbschalen vorgesehen, dazwischen einen dünnen Backzusammenhang mit Kanälen, Gravurlinien, Rippen bzw. Stegen vorzusehen.
a. Bereitstellen von Backformen für herkömmliche Flachwaffelblatt-Backautomaten bei denen Trennlinien zum späteren Abtrennen von Stücken vordefinierter Form signifikant dünner ausgeführt sind oder auch zusätzlich dünne Bereiche eines sogenannten Backzusammenhangs vorhanden sind, das heißt um mehr als 50% dünner, bevorzugt um mehr als 70% dünner. Der Spalt für den Backzusammenhang kann auch so dünn ausgeführt werden, dass in den Trennlinien bzw. im Backzusammenhang nach dem Backvorgang Löcher auftreten. Eine Bedingung für die erfindungsgemäße Hohlwaffelbackform ist, dass in den Trennlinien bzw. im Backzusammenhang einzelne Kanäle bzw. Gravurlinien vorhanden sind, welche bis an den Rand der abtrennbaren Flachwaffelstücke reichen und so die Funktion des Abführens der Dampfdruckspitze im ersten Teil des Backvorganges erfüllen. Optional sind zur mechanischen Stabilisierung des Backzusammenhanges für das leichte Entformen der fertig gebackenen Struktur weitere, gegebenfalls auch tiefere Kanäle, Rippen, Gravurlinien und/oder Stege vorhanden mit der Eigenschaft, dass sie nicht ganz an die abtrennbaren Flachwaffelstücke heranreichen.
b. Hinsichtlich der Backmassen gibt es keine Einschränkungen. Es finden alle konventionellen Backmassen für Flachwaffeln Verwendung.
c. Die Backmasse wird in bekannter Weise in Linienform dosiert.
d. Die Backbedingungen am Waffelbackautomaten unterscheiden sich nicht signifikant von denen bekannter Flachwaffelbackplatten, sodass vom Fachmann die Backtemperatur und die Backzeit nach seiner Erfahrung leicht einzustellen sind und mit den konventionellen Bedingungen vergleichbar sind.
e. Das Entformen der gebackenen Flachwaffelblätter erfolgt nach einem der bekannten Verfahren entweder mittels Schwerkraft mit Gebläseunterstützung und konventionellem Herausführen der Blätter oder aber mittels deren Vakuumabnahme.
f. Die entformten Produktblätter werden für die weiteren Produktionsschritte in Aufnahmeträger eingebracht, welche den Konturen der Blätter und der enthaltenen Trennlinien bzw. Backzusammenhänge entsprechen. Durch Anpressen einer die Konturen exakt nachbildenden Gegenplatte erfolgt ein sauberes Abtrennen der Flachwaffelformstücke, die zur weiteren Verarbeitung gegebenenfalls mittels Vakuum abgenommen oder aber gehalten werden, um Reste des Backzusammenhangs oder der Trennlinien entfernen zu können.
g. Die anschließenden Prozessschritte können umfassen: Ein Beschichten, Dosieren von Creme oder anderer Massen etc. In der Folge wird in bekannter Weise mit einem zweiten gleich geformten Flachwaffelkörper kombiniert oder aber mit Überzügen, Dekors etc. ein Zielprodukt fertig gestellt und sodann einer Kühlung und Verpackung zugeführt.

### Beispielhaftes allgemeines Verfahrenschema:

Bereitstellen einer Backplattenvorrichtung bzw. einer Hohl- oder Flachwaffelbackform, die nach dem Backen zu Produktblättern mit Trennlinien und/oder Stellen mit dünnem Backzusammenhang führt. Die Trennlinien bzw. der dünne Backzusammenhang werden durch Kanäle bzw. Gravurlinien zum Abführen des Dampfes überbrückt.

Zusätzlich können Rippen bzw. Stege zur Versteifung des Backzusammenhangs angebracht sein. Das Backen erfolgt in einem konventionellen Waffelbackautomaten. Zusätzliche aufwendige Verfahrensschritte wie beispielsweise die Öffnung der Backplatten während des Backvorgangs zur Abführung des Dampfes können entfallen.

### Anschließend:

Dosieren von Waffelbackmassen im Linienaufguss, für größere Hohlwaffelhalbschalen auch mit zentral orientierten Punktaufgüssen je Waffelhalbschale.

### Anschließend:

Backen und Entformen von Waffelblättern, die durch Trennlinien und / oder Stellen mit dünnem Backzusammenhang leicht abtrennbare Formen vordefiniert haben, welche nach dem Abtrennen nur einen dünnen, optisch kaum wahrnehmbaren offenen Rand haben. Das Entformen erfolgt mit konventionellem Ausblasen und Herausführen, bevorzugt aber mittels Vakuumabnahmeverfahren.

### Anschließend:

Die erhaltenen Blätter werden optional in entsprechend vorgeformten Aufnahmen gehalten. Durch Zusammenführen mit einer die gewünschten Konturen exakt abbildenden Gegenplatte erfolgt ein sauberes Trennen der vorgeformten Hohl- bzw. Flachwaffelstücke.

### Anschließend:

Kontrollierte Übergabe zu den weiteren Prozessschritten wie etwa Beschichten, Dosieren, Streichen , Einlegen, etc. unmittelbar im Anschluss.

In weiterer Folge wird die Erfindung anhand konkreter Ausführungsbeispiele weiter erörtert.

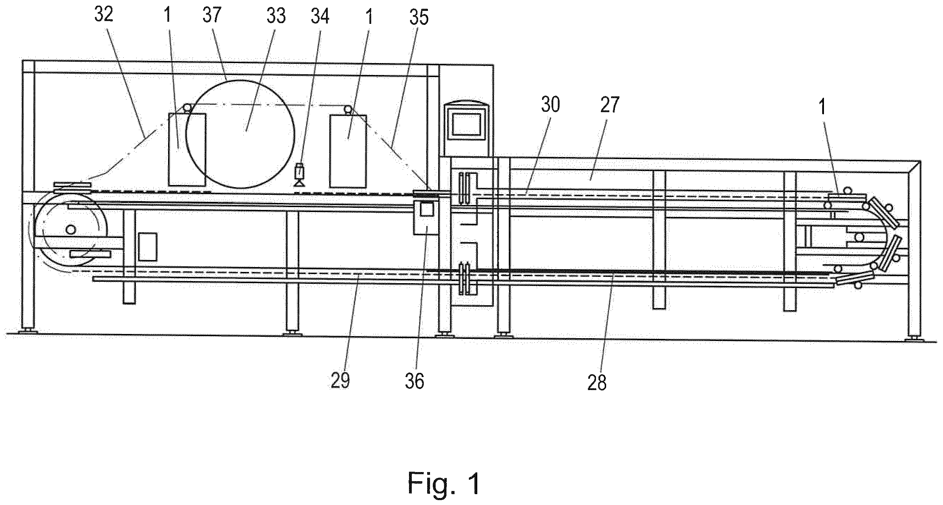

Fig. 1 zeigt eine schematische Darstellung eines erfindungsgemäßen Backofens, der insbesondere als Waffelblatt-Backautomat zur industriellen Herstellung von Backprodukten ausgebildet ist. Der Ofen umfasst einen Backraum 27, der über herkömmliche Mittel beheizbar oder beheizt ist. Ferner ist eine endlose Backzangenkette 28 vorgesehen, die insbesondere durch den Backraum 27 verläuft. Die Backzangenkette 28 ist längs einer in sich geschlossenen Umlaufbahn angeordnet, die sich bevorzugt in zwei übereinander angeordneten Transportebenen 29 und 30 erstreckt. Die Backzangenkette 28 enthält Backzangen 1. Diese sind auf- und zuklappbar ausgeführt und insbesondere im geschlossenen Zustand verriegelbar. In der schematischen Darstellung der Fig. 1 sind aus Gründen der Übersichtlichkeit nur einige wenige, ausgewählte Backzangen 1 dargestellt. Üblicherweise verlaufen die Backzangen 1 aneinandergereiht entlang der gesamten Backzangenkette 28. Der Backofen umfasst eine Einrichtung 32 zum Auf- und Zuklappen der Backzangen 1. Diese Einrichtung 32 ist insbesondere als Kulissensteuerung ausgeführt, die in ein Steuerorgan des Backzangenpaares eingreift, um beispielsweise die obere Backplatte von der unteren Backplatte zu trennen und die Backzange dadurch aufzuklappen. Ferner umfasst der Backofen eine Beschickungsstation 34. Bei dieser Beschickungsstation 34 wird der Teig in die Backzangen 1 eingebracht. Dies kann beispielsweise durch ein quer verlaufendes Zuführorgan erfolgen, das in regelmäßigen Abständen mit Löchern geöffnet ist. Über Zuführung des Teiges durch dieses Zuführorgan wird der Teig in vorgegebenem Abstand auf eine der Backplatten aufgetragen. Nachgeordnet der Beschickungsstation ist eine Einrichtung 35 zum Zuklappen der Backzangen 1 vorgesehen. Auch diese Einrichtung 35 zum Zuklappen kann beispielsweise als Kulissensteuerung ausgeführt sein.

Dem genannten Merkmal nachgeordnet ist eine Verriegelungsvorrichtung 36 des Backofens zur Verriegelung der Backzangen vorgesehen.
Ferner umfasst der Backofen eine Ausgabestation 33. In der Ausgabestation 33 ist eine Produktabnahmevorrichtung 37 vorgesehen, über die der fertig ausgebackene Waffelformkörper aus der Backzange 1 entnommen werden kann.
In dieser Ausgabestation werden die Waffelblätter aus den Backzangen entnommen. Die Produktabnahmevorrichtung 37 ist schematisch als Kreis dargestellt. Beispielsweise können an einer Trommel oder an einem drehenden Gestell Unterdruckmittel vorgesehen sein, über welche die Waffelblätter entnommen werden können. Im Gegensatz zu weichen Waffeln ist bei der Entnahme von knusprig spröden Waffeln, wie sie bei dem erfindungsgemäßen Verfahren hergestellt werden, darauf zu achten, dass bei der Entnahme kein Bruch des Waffelformkörpers also des Waffelblattes geschieht.

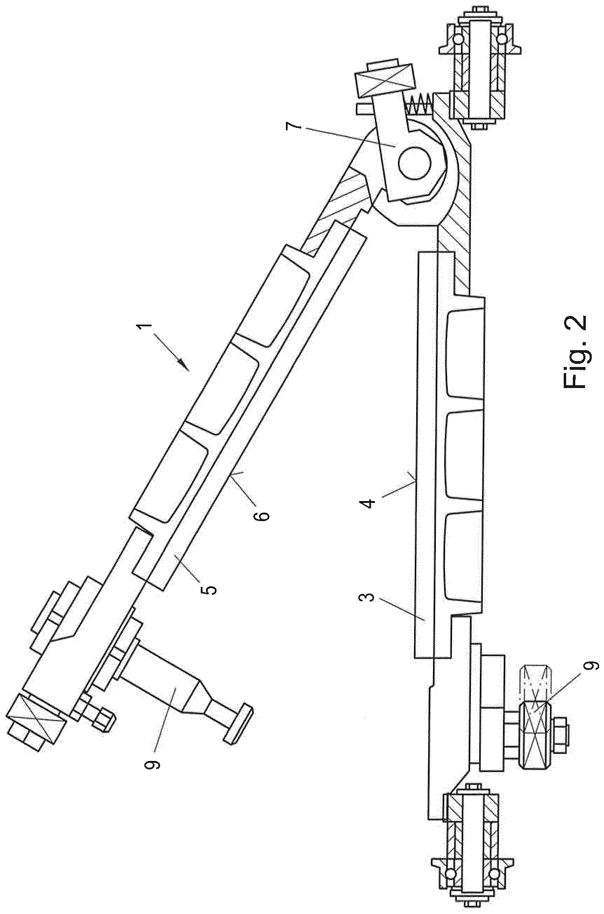

Fig. 2 zeigt eine schematische Darstellung einer erfindungsgemäßen Backplattenvorrichtung, die als Backzange 1 ausgeführt ist. Die Backplattenvorrichtung umfasst eine erste Backplatte 3 mit einer ersten Backfläche 4 sowie eine zweite Backplatte 5 mit einer zweiten Backfläche 6. Die Backplatten sind über eine Bewegungsvorrichtung 7 öffen- und schließbar miteinander verbunden. Die Bewegungsvorrichtung 7 ist im vorliegenden Fall insbesondere als Scharniergelenk ausgeführt. Die Backplatten 3, 5 können zur Bildung der Backplattenvorrichtung selbst scharnierartig miteinander verbunden sein oder mit einem Träger verbunden sein, der die Scharnierfunktion übernimmt. Dazu ist ein Rahmen vorgesehen, der scharnierartig öffenbar ist. An diesem Rahmen können in bekannter Weise die Backplatten 3, 5 vorgesehen sein.

Ferner weist die Backplattenvorrichtung eine Verriegelungsvorrichtung 9 auf. Diese Verriegelungsvorrichtung 9 ermöglicht die Verriegelung der Backplatten 3, 5 gegenüber einander im geschlossenen Zustand. Zur Herstellung knusprig spröder Waffeln, die unter Druck ausgebacken werden, ist es zwingend notwendig, dass eine Verriegelungsvorrichtung vorgesehen ist. Diese ist insbesondere dazu notwendig, dass sich Druck zwischen den beiden Backplatten 3, 5 aufbauen kann. Die Verriegelungsvorrichtung 9 umfasst in der vorliegenden Ausführung einen pilzförmigen Zapfen, der starr mit einer der beiden Platten verbunden ist. Die jeweils andere Platte weist eine Aufnahme für den pilzförmigen Zapfen auf. Ist der Zapfen in die Aufnahme eingeführt, so kann über ein Verriegelungselement das Herausziehen des Zapfens verhindert werden. Auch diese Verriegelung geschieht bevorzugt durch eine Kulissensteuerung.

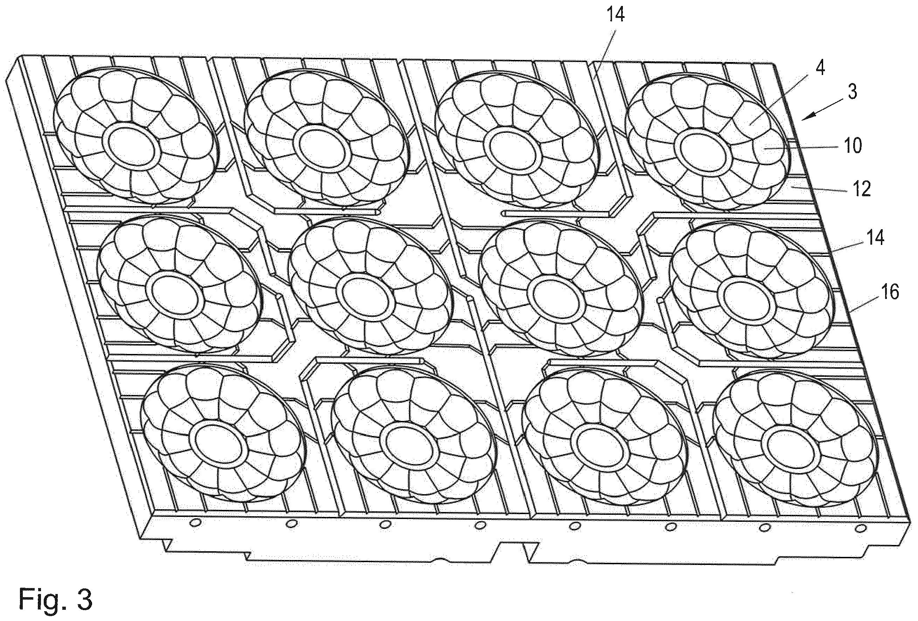

Fig. 3 zeigt eine Ausführungsform einer erfindungsgemäßen Backplatte. Diese Backplatte entspricht beispielsweise einer Unter- oder Oberplatte der Backplattenvorrichtung.

Der Klarheit halber wird definiert, dass die dargestellte Platte die erste Backplatte 3 mit einer ersten Backfläche 4 ist. Die Backfläche 4 entspricht dabei jener Oberfläche der Backplatte 3, die im geschlossenen Zustand der zweiten Backplatte 5 zugewandt ist. Die erste Backplatte 3 bildet mit der zweiten Backplatte 5 im geschlossenen Zustand eine Backform 8. Zur Verbesserung der Übersichtlichkeit wurde in der vorliegenden Darstellung der Fig. 3 die zweite Backplatte 5 ausgeblendet. Durch die erste Backplatte ist eine Backform 8 gebildet, die zumindest einen Produktraum 10 umfasst. In der vorliegenden Darstellung sind drei mal vier, also zwölf Produkträume 10 vorgesehen. Im Bereich des Produktraumes weist die Backplatte eine muldenförmige Vertiefung auf. Diese muldenförmige Vertiefung ist bei der Herstellung des Waffelformkörpers zumindest teilweise mit der Backmasse gefüllt.

Ferner umfasst das Backplattenpaar und insbesondere die Backform 8 einen Spaltabschnitt 12. Dieser Spaltabschnitt 12 umgibt den Produktraum 10. Im Spaltabschnitt 12 sind Kanäle 14 vorgesehen. Diese Kanäle dienen insbesondere der Dampfableitung des beim Backprozess entstehenden Dampfes. Im Speziellen wird der Dampf an die Außenseite 16 der Backplatte 3 geleitet, wo der Dampf aus der Backplattenvorrichtung entweichen kann. Die Kanäle 14 erstrecken sich dabei von dem Produktraum 10 durch den Spaltabschnitt 12 nach außen. Gegebenenfalls münden die Kanäle 14 in den Produktraum oder reichen bis zum Rand des Produktraums. Die Kanäle durchsetzen bevorzugt den Spaltabschnitt 12. Dies bedeutet z.B., dass der Kanal den Produktraum 10 nach außen öffnet. In der vorliegenden Ausführung sind die Kanäle 14 als Gravuren der Backplatte bzw. der ersten Backfläche 4 ausgeführt. Beispielsweise sind die Kanäle 14 als Gravuren der Backfläche im Spaltabschnitt 12 ausgeführt. Gemäß einer weiteren Ausführungsform können die Kanäle jedoch auch als Bohrungen innerhalb der Backplatte ausgeführt sein.

Gegebenenfalls sind mehrere Kanäle 14 zusammengeführt und münden in einen Kanal, der nach außen geöffnet ist.

Gemäß einer weiteren nicht dargestellten Ausführungsform mündet ein Kanal in zwei Produkträume 10 und verbindet somit die Produkträume 10 miteinander. In der dargestellten Ausführungsform ist der Dampf von einem Produktraum 10 über mehrere Kanäle 14 abgeführt. Dazu münden mehrere Kanäle 14 in einen Produktraum 10. Bevorzugt münden die Kanäle 14 regelmäßig am Umfang des Produktraums 10 verteilt in den Produktraum. Dadurch ist eine gleichmäßige Ableitung des Wasserdampfes erreicht.

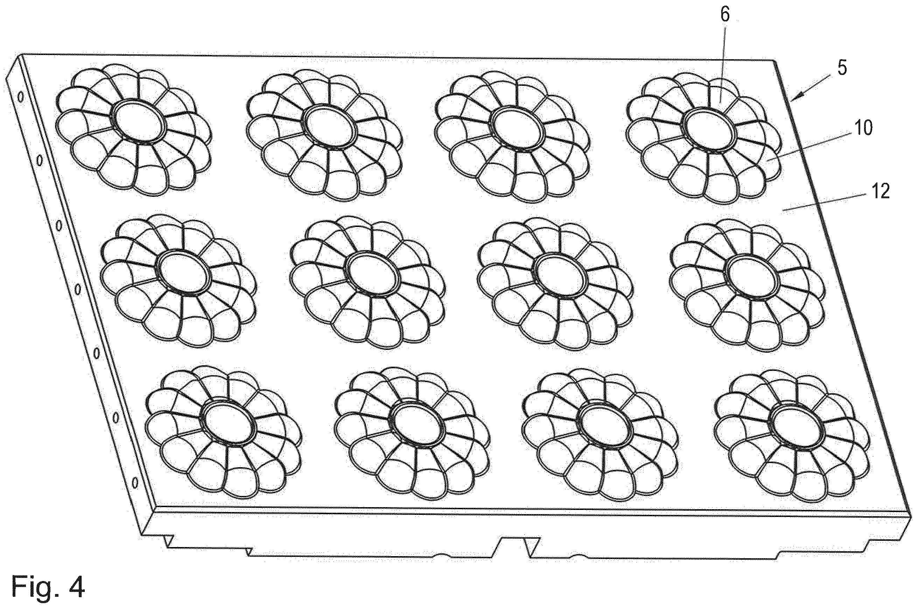

Fig. 4 zeigt eine mögliche Gegenplatte, insbesondere eine zweite Backplatte 5 zur ersten Backplatte 3 der Fig. 3. Die zweite Backplatte 5 weist eine zweite Backfläche 6 auf. In zugeklappter Stellung ist durch die erste Backplatte 3 und deren erste Backfläche 4 und die zweite Backplatte 5 und deren zweite Backfläche 6 eine Backform 8 gebildet. Zur Verbesserung der Übersichtlichkeit ist die erste Backplatte 3 und die erste Backfläche 4 ausgeblendet und nicht dargestellt. Vorgesehen ist wiederum die Backform 8, die einen Produktraum 10 sowie einen Spaltabschnitt 12 umfasst. Die zweite Backfläche 6 der zweiten Backplatte 5 ist bei der vorliegenden Ausführung im Spaltabschnitt im Wesentlichen glatt ausgeführt und weist keine Gravur oder keinen Kanal auf. Der Kanal 14 ist jedoch dadurch gebildet, dass die erste Backplatte 3 einen Kanal umfasst. Somit verläuft bei Zusammenführung der ersten Backplatte der Fig. 3 und der zweiten Backplatte der Fig. 4 der Kanal in der ersten Backplatte 3.

Gemäß einer nicht dargestellten Ausführung der Erfindung können jedoch auch in beiden Backplatten, d.h. in der ersten Backplatte 3 und in der zweiten Backplatte 5, Kanäle 14 vorgesehen sein. Diese Kanäle können erfindungsgemäß als Gravur in der Backfläche oder als Bohrung ausgeführt sein. In der vorliegenden Ausführungsform der Fig. 4 umfasst die zweite Backplatte 5 im Produktraum 10 ausgewölbte, buckelförmige Produktflächen.

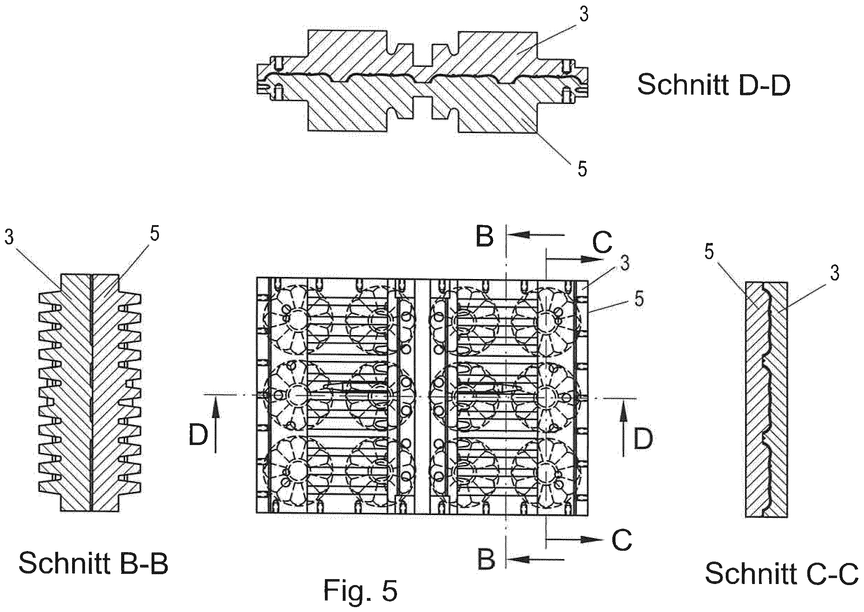

Fig. 5 zeigt eine schematische Aufsicht einer Ausführungsform der erfindungsgemäßen Backplattenvorrichtung sowie drei Schnitte, die entlang der Schnittlinien B-B, C-C und D-D verlaufen.

Die geschnittene und schematisch dargestellte Backplattenvorrichtung entspricht im Wesentlichen der Backplattenvorrichtung der Figuren 3 und 4.

Vorgesehen ist eine erste Backplatte 3 sowie eine zweite Backplatte 5. Die Schnittdarstellungen werden in den folgenden Figuren weiter erörtert.

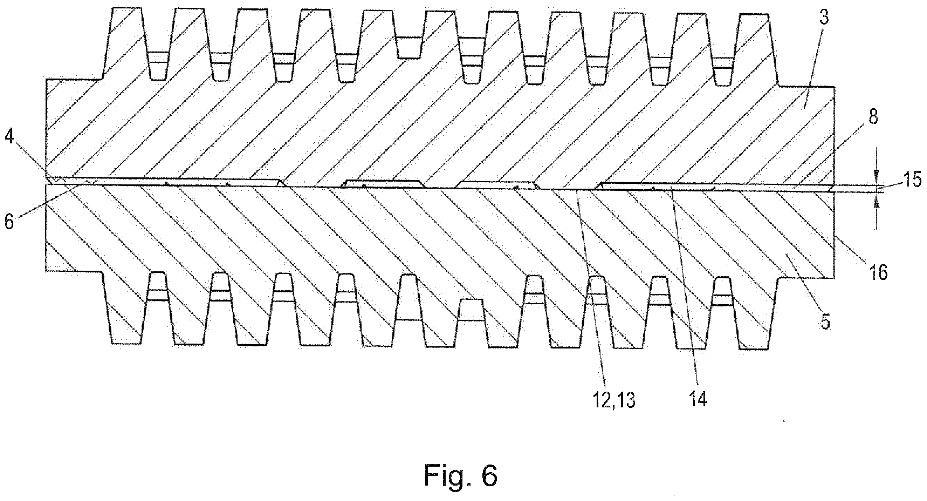

Fig. 6 zeigt den Schnitt B-B der Fig. 5. Dazu sind die erste Backplatte 3 sowie die zweite Backplatte 5 geschnitten dargestellt. Zwischen den beiden Backplatten 3, 5 ist die Backform 8 vorgesehen. Die erste Backplatte 3 weist eine erste Backfläche 4 auf. Die zweite Backplatte 5 weist eine zweite Backfläche 6 auf. In zusammengeklappter Stellung weisen die Backflächen 4, 6 zueinander und bilden zusammen die Backform 8. In der schematischen Schnittdarstellung der Fig. 6 verläuft der Schnitt zur Gänze durch den Spaltabschnitt 12. Der Produktraum 10 ist nicht geschnitten. Der Spaltabschnitt 12 weist eine Spaltdicke 13 auf. Diese Spaltdicke ist in der vorliegenden Darstellung im Wesentlichen Null. So ist die erste Backfläche 4 direkt auf die zweite Backfläche 6 gelegt. Durch die Druckentwicklung beim Ausbacken des Waffelformkörpers kann jedoch eine Entfernung durch elastische Verformung der Backplatten erfolgen. In diesem Fall ist eine Spaltdicke 13 größer Null vorhanden.

Grundsätzlich wird als Dicke der Abstand zwischen der ersten Backfläche 4 zur zweiten Backfläche 6 bezeichnet. Bei dem Produkt entspricht die Dicke dem Abstand der ersten Oberfläche des Waffelformkörpers, die durch die erste Backfläche gebildet ist,von der zweiten Oberfläche des Waffelformkörpers, die durch die zweite Backfläche gebildet wird. Im Spaltabschnitt 12 sind ferner Kanäle 14 vorgesehen. Die Kanäle 14 weisen eine Kanaldicke 15 auf. Die Kanaldicke 15 ist dabei größer als die Spaltdicke 13. Die Kanäle 14 sind bevorzugt an die Außenseite 16 der Backplatten geführt. Dadurch sind der Produktraum und der Kanal 14 nach außen geöffnet.

Die Schnittdarstellungen der Figuren 5 bis 8 der Backplattenvorrichtung sind vereinfacht dargestellt. Insbesondere sind alle Elemente mit Ausnahme des Backplattenpaares ausgeblendet.

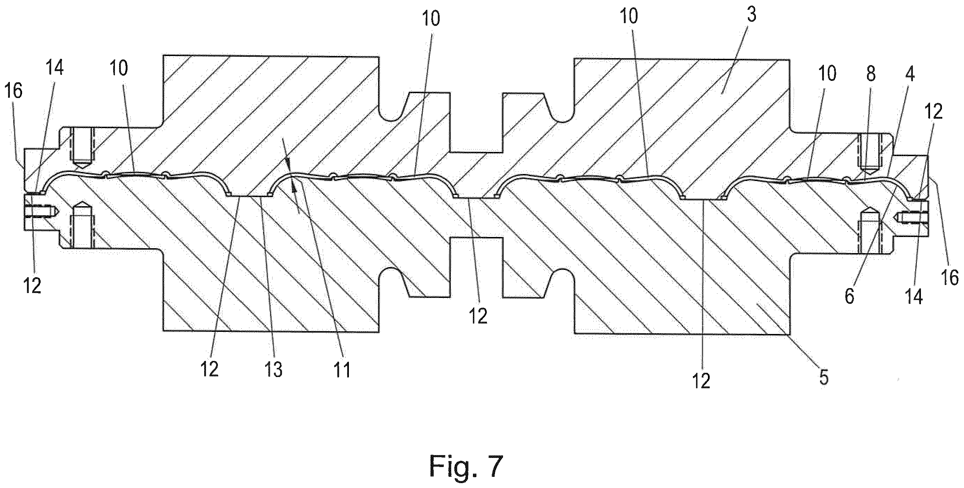

Fig. 7 zeigt eine schematische Schnittdarstellung entlang der Schnittlinie D-D. Der Schnitt verläuft durch die erste Backplatte 3 sowie die zweite Backplatte 5. Zwischen den Backplatten 3, 5 und deren Backflächen 4 und 6 ist eine Backform 8 gebildet.

Die Schnittlinie D-D verläuft durch einen bzw. mehrere Spaltabschnitte 12 sowie durch einen bzw. mehrere Produkträume 10. Ferner sind Kanäle 14 vorgesehen, die den Produktraum 10 nach außen öffnen. Die Kanäle 14 durchsetzen den Spaltabschnitt 12. Dadurch ist der Produktraum 10 nach außen geöffnet. Insbesondere verlaufen die Kanäle bis an die Außenseite 16 des Backplattenpaares. Der Produktraum 10 weist eine Produktdicke 11 auf. Diese Produktdicke 11 ist im Wesentlichen über den gesamten Produktraum 10 konstant. Der Spaltabschnitt 12 weist eine Spaltdicke 13 auf, die in der vorliegenden Darstellung im Wesentlichen Null ist. Gemäß einer bevorzugten Ausgestaltung der Erfindung ist die Spaltdicke 13 zumindest 50% kleiner als die Produktdicke 11. Besonders bevorzugt ist eine 70%-ige Reduktion der Spaltdicke gegenüber der Produktdicke gegeben. Gegebenenfalls kann die Spaltdicke zumindest abschnittsweise Null betragen.

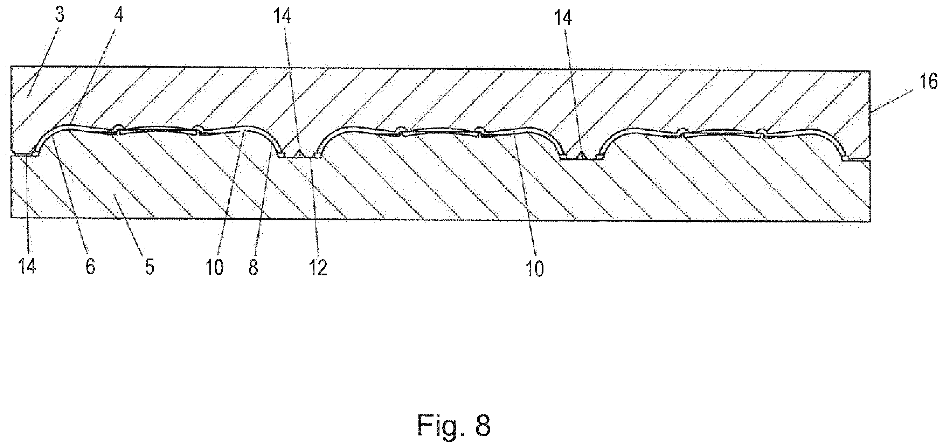

Fig. 8 zeigt eine schematische Schnittdarstellung des Schnitts entlang der Schnittlinie C-C aus Fig. 5. Die vereinfacht ausgeführte Schnittdarstellung zeigt eine erste Backplatte 3 mit einer ersten Backfläche 4 sowie eine zweite Backplatte 5 mit einer zweiten Backfläche 6. Durch Zusammenführen der ersten und der zweiten Backplatte sowie deren Backflächen ist eine Backform 8 gebildet. Die Backform 8 umfasst einen bzw. mehrere Produkträume 10 sowie dazwischen liegende Spaltabschnitte 12. Die Spaltabschnitte 12 sind von Kanälen 14 durchsetzt. Im Bereich zwischen zwei Produkträumen 10 ist jeweils ein Kanal normal zu seiner Längserstreckung geschnitten. Der Kanal ist in der vorliegenden Ausführungsform der Fig. 8 als im Wesentlichen V-förmige Gravur ausgeführt, die in der ersten Backplatte 3 verläuft. Gemäß einer weiteren Ausführungsform können die Kanäle 14 jedoch auch in beiden oder nur in der zweiten Backplatte 5 verlaufen. Bevorzugt verbinden die Kanäle 14 zwei Produkträume 10 miteinander oder verlaufen von dem Produktraum 10 an die Außenseite 16 eines Backplattenpaares.

Zur Herstellung der erfindungsgemäßen Waffelformkörper wird bei dem erfindungsgemäßen Backverfahren zumindest der Produktraum 10, jedoch bevorzugt die gesamte Backform 8 mit einer Backmasse gefüllt. Die Backmasse ist im Wesentlichen flüssig bis zähflüssig und kleidet somit die Backform 8 aus. Durch den Backvorgang und das Austreten des Dampfes entsteht dabei ein im Wesentlichen knusprig spröder Waffelformkörper mit einer porösen Krume. Die Flächen des Waffelformkörpers, die an der ersten Backfläche 4 bzw. an der zweiten Backfläche 6 anliegen, weisen eine im Wesentlichen geschlossene Backhaut auf. Durch den Produktraum 10 ist dabei das Backprodukt gebildet. Durch den Spaltabschnitt 12 ist zumindest eine, bevorzugt mehrere Verbindungslamellen gebildet. Durch die Kanäle 14 ist eine bzw. mehrere Rippen gebildet. Jene Bereiche der Backform 8, die sich zwischen den Produkträumen 10 befinden, bilden den Backzusammenhang des Waffelformkörpers. Dieser Backzusammenhang wird gemäß dem vorliegenden Verfahren zur Bildung der fertigen Backprodukte entfernt.

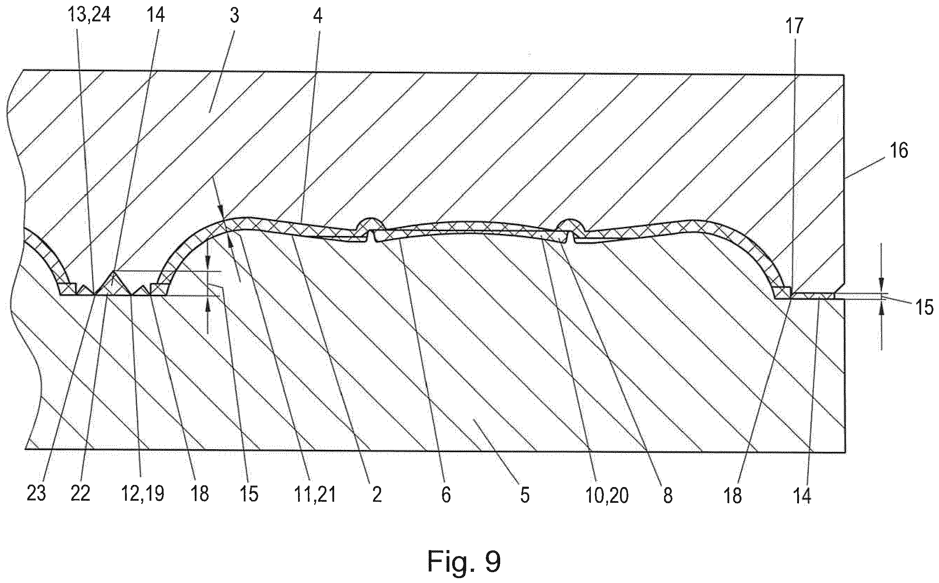

Fig. 9 zeigt ein Detail eines mit Backmasse gefüllten Backplattenpaares, das insbesondere dem Backplattenpaar aus Fig. 8 entspricht. Im Speziellen ist die Schnittdarstellung der Fig. 9 eine Detailschnittdarstellung der Darstellung der Fig. 8 mit einem Waffelformkörper 2. Dieser Waffelformkörper 2 ist durch die erste Backplatte 3 sowie die zweite Backplatte 5 gebildet. Die erste Backfläche 4 sowie die zweite Backfläche 6 bilden zusammen eine Backform 8, die in der vorliegenden Darstellung komplett durch den Waffelformkörper 2 ausgefüllt ist. Im Produktraum 10 ist das Backprodukt 20 angeordnet. Im Spaltabschnitt 12 ist der Backzusammenhang 19 gebildet. Der Backzusammenhang 19 umfasst eine Verbindungslamelle 23 sowie Rippen 22. Die Produktdicke 11 entspricht in der vorliegenden Darstellung im Wesentlichen der Backproduktdicke 21. Die Spaltdicke 13 entspricht in der vorliegenden Darstellung im Wesentlichen der Lamellendicke 24. Diese ist in der vorliegenden Darstellung nahezu Null. Gemäß einer bevorzugten Ausführungsform ist die Lamellendicke etwa 0,1-0,8mm dick. Die Kanaldicke 15 kann für unterschiedliche Kanäle unterschiedlich dimensioniert sein. Beispielsweise kann es durch Zusammenführen mehrerer Kanäle 14 von Nöten sein, dass einzelne Kanäle dicker ausgeführt sind, als andere. Insbesondere ist es von Nöten, dass diese einen größeren Querschnitt aufweisen. Bevorzugt ist die Kanaldicke 15 größer als die Spaltdicke 13. Die Kanaldicke 15 entspricht in diesem Bereich jedenfalls im Wesentlichen der Dicke der Rippe 22. Im Bereich des Übergangs zwischen dem Spaltabschnitt 12 und dem Produktraum 10 ist eine Sollbruchlinie 18 vorgesehen. Diese Sollbruchlinie 18 ist in der vorliegenden Ausführungsform geschnitten und somit im Wesentlichen projizierend verlaufend dargestellt. Erreicht wird dies im Bereich des Übergangs zwischen dem Kanal und dem Produktraum beispielsweise dadurch, dass bei Herstellung der Gravur zur Bildung des Kanals 15 der Fräskopf knapp vor dem kompletten Durchstoßen des Randes des Spaltabschnitts 12 gestoppt wird. Dadurch wird ein Kamm 17 gebildet. Dieser Kamm 17 der Backplatte bildet bei dem erfindungsgemäßen Backprozess eine Sollbruchlinie 18.

Im Bereich des Übergangs zwischen einem glatten Spaltabschnitt, ohne Kanal, ist die Sollbruchlinie dadurch gegeben, dass die Lamelle dünner und spröder ausgeführt ist, als das Backprodukt.

Die Produktdicke 11 ist im Wesentlichen konstant über den gesamten Verlauf des Backproduktes 20 bzw. über den Verlauf des Produktraums 10. Dadurch wird ein gleichmäßiges Ausbacken des Backproduktes bewirkt. Hingegen ist die Dicke des Spaltabschnittes 12, also die Spaltdicke 13, kleiner als die Produktdicke 11.

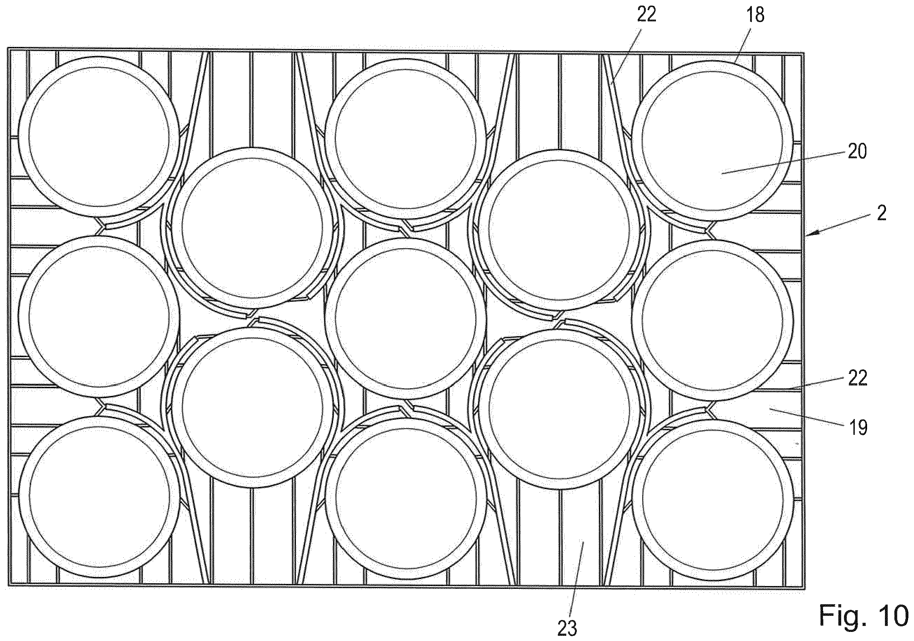

Fig. 10 zeigt eine beispielhafte Ausführung eines erfindungsgemäßen Waffelformkörpers 2. Dieser ist ein Backzwischenprodukt zur Herstellung des Backprodukts 20. Mehrere Backprodukte 20 sind in dem Waffelformkörper 2 enthalten. Die Backprodukte 20 sind von einem Backzusammenhang 19 umgeben. Wie bereits beschrieben, ist der Backzusammenhang 19 von jenem Bereich der Backplatten gebildet, der als Spaltabschnitt bezeichnet ist. Der Backzusammenhang 19 umfasst Rippen 22. Diese Rippen 22 verlaufen z.B. vom Rand des Backprodukts 20 bis zum Rand des Waffelformkörpers 2. Bevorzugt sind mehrere Rippen 22 vorgesehen. Gegebenenfalls sind mehrere Rippen im Verlauf des Backzusammenhangs zu einer breiteren bzw. dickeren Rippe zusammengeführt. Die Rippen dienen beim Ausbackprozess der Ableitung des Dampfes. Beim fertigen Waffelformkörper dienen die Rippen der Versteifung des Waffelformkörpers. Insbesondere ist dadurch eine Entnahme aus den Backzangen erleichtert. Dazu sind zumindest zwei, bevorzugt mehrere Rippen 22 schräg zueinander verlaufend angeordnet. Dadurch wird vermieden, dass durch die Rippen selbst Sollbruchstellen im Backzusammenhang gebildet sind. Die Rippen weisen gemäß der vorliegenden Ausführungsform einen im Wesentlichen dreieckigen Querschnitt auf. Jedoch können die Rippen durch Vorsehen andersförmiger Kanäle oder Gravuren der Waffelbackplatten auch andere Querschnitte wie beispielsweise halbkreisförmige, rechteckförmige, stegförmige, bandförmige oder schlitzförmige Form aufweisen.

Die Verbindungslamellen 23 sind zwischen den Backprodukten 20 angeordnet und verbinden diese gegebenenfalls. In der Fläche der Verbindungslamellen 23 verlaufen bevorzugt die Rippen 22. Das dargestellte Backprodukt ist als im Wesentlichen runder, becherförmiger Körper ausgebildet. Durch das erfindungsgemäße Brechen entlang der Sollbruchlinie 18 weisen die Backprodukte 20 einen im Wesentlichen geschlossenen Rand auf. Die Sollbruchlinie 18 verläuft bei der dargestellten Ausführungsform kreisförmig in unmittelbarem Anschluss an das Backprodukt 20.

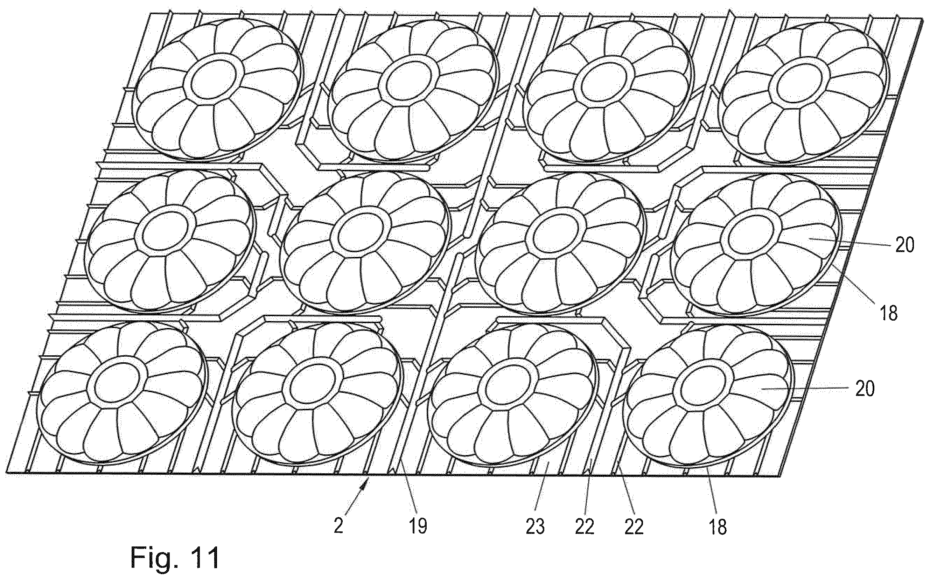

Fig. 11 zeigt eine weitere Ausführungsform eines erfindungsgemäßen Waffelformkörpers 2, wie er beispielsweise durch Verwendung der Backplatten der Figuren 3 bis 9 herstellbar ist. Der Waffelformkörper 2 umfasst einen Backzusammenhang 19, der Rippen 22 umfasst. Gegebenenfalls oder bevorzugt umfasst der Backzusammenhang 19 eine Verbindungslamelle 23. Die Backprodukte 20 sind durch den Backzusammenhang 19 miteinander verbunden. Die Rippen 22 verlaufen vom Rand der Backprodukte 20 bis zum äußeren Rand des Waffelformkörpers 2.

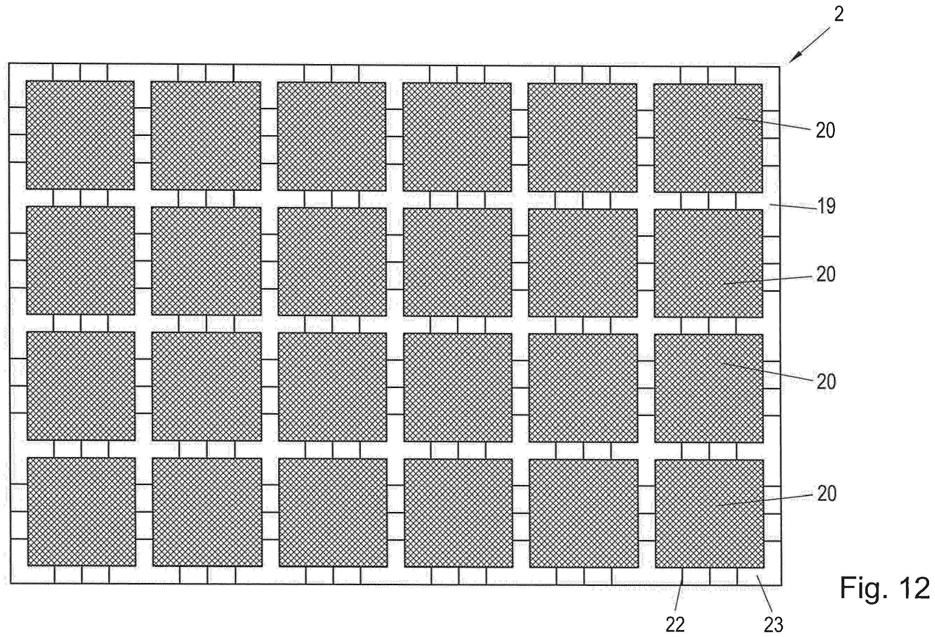

Fig. 12 zeigt eine weitere Ausführungsform eines erfindungsgemäßen Backprodukts bzw. eines erfindungsgemäßen Waffelformkörpers 2. Dabei umfasst der Waffelformkörper wiederum mehrere Backprodukte 20. Die Backprodukte 20 sind als Flachwaffeln ausgebildet. Diese Flachwaffeln weisen eine reliefartige, insbesondere gitterförmige Oberflächenstruktur auf, wie sie für Flachwaffeln üblich ist. Diese Struktur wird durch eine gitterartige Gravur der Backplatten erzielt. Die einzelnen Backprodukte sind über einen Backzusammenhang 19 miteinander verbunden. Der Backzusammenhang 19 umfasst einerseits Rippen 22 und gegebenenfalls oder bevorzugt Verbindungslamellen 23. Die Rippen 22 verlaufen einerseits von Backprodukt zu Backprodukt und andererseits vom Backprodukt 20 bis zur Außenkante des Waffelformkörpers 2. Die zugehörigen Backplatten weisen eine komplementäre Gravur und eine komplementäre Backform auf. Die Produktdicke des Backproduktes 20 ist erfindungsgemäß größer als die Lamellendicke der Verbindungslamellen.

Bei Waffeln mit einer reliefartigen Struktur bedeutet dies grundsätzlich, dass die Kerndicke des Backprodukts 20 dicker ist als die Lamellendicke der Verbindungslamelle. Die Kerndicke beschreibt die Dicke eines Körpers, der sich durchgehend durch das Backprodukt erstreckt. Im Wesentlichen ist das jene Dicke, die bestehen bleibt, würde die reliefartige Struktur der Waffel entfernt werden. Dies gilt grundsätzlich für alle Ausführungsformen der Erfindung mit waffeltypischer reliefartiger Oberflächenstruktur. Diese reliefartige Oberflächenstruktur ist jedoch nicht gleichzusetzen mit der offenporigen Struktur der Krume einer Trennfläche. Viel mehr ist die geschlossene Backhaut meandrierend reliefartig ausgeführt.

Die Rippen 22 sind auch bei dieser Ausführungsform dicker ausgeführt als die Verbindungslamelle. Dadurch ist einerseits die Stabilität des fertigen Waffelformkörpers erhöht und andererseits beim Ausbacken ein Dampftransport ermöglicht.

Die Verbindungslamellen 22 können gemäß einer weiteren Ausführungsform sehr schmal ausgeführt sein, sodass die Backprodukte 20 nahezu aneinander stoßen. Die Verbindungslamellen sind dadurch als nutförmige Einschnürungen des Waffelformkörpers ausgebildet. Jedoch sind diese nutförmigen Einschnürungen des Waffelkörpers durch Rippen 22 durchsetzt, sodass beim Ausbacken der Dampf abgeleitet werden kann. Entlang dieser nutförmig ausgebildeten Verbindungslamellen kann der Waffelformkörper in die fertigen Backprodukte 20 zerteilt werden. Bei einer nutförmigen Ausgestaltung der Lamelle ist jedoch nahezu kein Backzusammenhang 19 vorhanden. Dennoch tritt der erfindungsgemäße Effekt auf, dass die Backprodukte an den Rändern im Wesentlichen geschlossen sind, da die geschlossene Backhaut der Oberseite und die geschlossene Backhaut der Unterseite im Wesentlichen zusammengeführt sind.

### Bezugszeichenliste

- 1: Backzange
- 2: Waffelformkörper
- 3: Erste Backplatte
- 4: Erste Backfläche
- 5: Zweite Backplatte
- 6: Zweite Backfläche
- 7: Bewegungsvorrichtung
- 8: Backform
- 9: Verriegelungsvorrichtung der Backplatte
- 10: Produktraum
- 11: Produktdicke
- 12: Spaltabschnitt
- 13: Spaltdicke
- 14: Kanal
- 15: Kanaldicke
- 16: Außenseite der Backplatte
- 17: Kamm
- 18: Sollbruchlinie
- 19: Backzusammenhang
- 20: Backprodukt
- 21: Backproduktdicke
- 22: Rippe
- 23: Verbindungslamelle
- 24: Lamellendicke
- 25: -
- 26: Kernbereich des Waffelformkörpers
- 27: Backraum
- 28: Backzangenkette
- 29: Transportebene
- 30: Transportebene
- 31: -
- 32: Einrichtung zum Aufklappen der Backzangen
- 33: Ausgabestation
- 34: Beschickungsstation
- 35: Einrichtung zum Zuklappen der Backzange
- 36: Verriegelungsvorrichtung des Backofens zur Verriegelung der Backzangen
- 37: Produktabnahmevorrichtung

## Patentansprüche

1. Backplattenvorrichtung, nämlich Backzange (1) mit einem Backplattenpaar, zur Herstellung unter Druck ausgebackener Waffelformkörper (2), wie spröde Flachwaffeln oder Hohlwaffeln, aus einem Waffelteig umfassend:
- eine erste Backplatte (3) mit einer ersten Backfläche (4),
- eine zweite Backplatte (5) mit einer zweiten Backfläche (6),
- eine Bewegungsvorrichtung (7), über welche die erste Backplatte (3) mit der zweiten Backplatte (5) öffen- und schließbar verbunden ist,
- eine Verriegelungsvorrichtung (9) zur Verriegelung der erste Backplatte (3) mit der zweiten Backplatte (5) in geschlossener Stellung,
wobei in geschlossener Stellung durch die erste Backfläche (4) und die zweite Backfläche (6) eine Backform (8) gebildet ist, die im Wesentlichen der Negativform des Waffelformkörpers (2) entspricht,
und wobei die Backform (8) einen Produktraum (10) mit einer Produktdicke (11) umfasst,
der von einem Spaltabschnitt (12) mit einer Spaltdicke (13) umgeben ist,
wobei die Spaltdicke (13) kleiner ist als die Produktdicke (11),
**dadurch gekennzeichnet,**
**dass** zumindest ein Kanal (14) mit einer Kanaldicke (15) zur Dampfableitung vorgesehen ist, der den Spaltabschnitt (12) durchsetzt, wobei die Kanaldicke (15) größer ist, als die Spaltdicke (13).

2. Backplattenvorrichtung nach Anspruch 1, **dadurch gekennzeichnet, dass** sich der Kanal (14) von dem Produktraum (10) bis zur Außenseite (16) der Backplatte (3,4) oder des Backplattenpaars erstreckt und dadurch den Produktraum (10) nach außen öffnet.

3. Backplattenvorrichtung nach Anspruch 1 oder 2, **dadurch gekennzeichnet, dass** zwei oder mehr Produkträume (10) vorgesehen sind, und dass sich der Kanal (14) von einem Produktraum (10) zu einem weiteren Produktraum (10) erstreckt und dadurch zwei Produkträume (10) miteinander verbindet,
und/oder dass mehrere Kanäle (14) in einen Produktraum (10) münden,
und/oder dass mehrere Kanäle (14) im Wesentlichen regelmäßig am Umfang des Produktraumes (10) verteilt in den Produktraum (10) münden.

4. Backplattenvorrichtung nach einem der Ansprüche 1 bis 3, **dadurch gekennzeichnet, dass** der Kanal (14) den Spaltabschnitt (12) entlang der ersten Backfläche (4) und/oder entlang der zweiten Backfläche (6) durchsetzt, oder dass der Kanal (14) als linienförmige Gravur in einer oder in beiden Backflächen (4,6) vorgesehen ist, wobei die linienförmige Gravur zumindest einen Spaltabschnitt (12) kreuzt.

5. Backplattenvorrichtung nach einem der Ansprüche 1 bis 4, **dadurch gekennzeichnet, dass** der Spaltabschnitt (12) eine Spaltdicke (13) aufweist, die weniger als 50% der Produktdicke (11), bevorzugt weniger als 30% der Produktdicke (11), beträgt, und/oder dass die Spaltdicke (13) zumindest abschnittsweise Null ist.

6. Backplattenvorrichtung nach einem der Ansprüche 1 bis 5, **dadurch gekennzeichnet, dass** sich der Spaltabschnitt (12) flächig zwischen den Produkträumen (10) und/oder zwischen einem Produktraum (10) und der Außenseite (16) des Backplattenpaars erstreckt.

7. Backplattenvorrichtung nach einem der Ansprüche 1 bis 6, **dadurch gekennzeichnet, dass** die Kanäle (14) schräg zueinander verlaufen, sodass der gebackene Waffelformkörper (2) eine stabile Struktur aufweist.

8. Backplattenvorrichtung nach einem der Ansprüche 1 bis 7, **dadurch gekennzeichnet, dass** im Produktraum (10) ein im Wesentlichen geschlossener, den Produktraum einschnürender Kamm (17) vorgesehen ist, sodass der gebackene Waffelformkörper (2) eine Sollbruchlinie (18) zur Trennung des Backproduktes (20) von dem Backzusammenhang (19) aufweist.

9. **Waffelformkörper (2),** insbesondere Backzwischenprodukt, aus einer unter Druck ausgebackenen, im unausgebackenen Zustand 55-70% Wasser enthaltenden Backmasse, umfassend ein Backprodukt (20) mit einer Backproduktdicke (21), das von einem Backzusammenhang (19) umgeben ist, **dadurch gekennzeichnet,**
**dass** der Backzusammenhang (19) zumindest eine Rippe (22) umfasst, die sich bis zum Rand des Backprodukts (20) erstreckt und dass sich die Rippe (22) von dem Backprodukt (20) bis an den Rand (24) des Waffelkörpers erstreckt und dass der Waffelformkörper (2) durch eine Backplattenvorrichtung nach einem der Ansprüche 1 bis 8 hergestellt ist.

10. Waffelformkörper nach Anspruch 9, **dadurch gekennzeichnet, dass** der Backzusammenhang (19) eine Verbindungslamelle (23) mit einer Lamellendicke (24) umfasst,
dass die Lamellendicke (24) zumindest 50% kleiner ist als die Backproduktdicke (21), bevorzugt zumindest 70% kleiner ist als die Backproduktdicke (21) oder gegebenenfalls zumindest abschnittsweise Null ist,
und/oder dass das Backprodukt (20) eine Backproduktdicke (21) von etwa 0,5 mm bis 5 mm aufweist, wobei der durchgehende Kernbereich (26) eine Dicke von etwa 0,5 mm bis 2 mm aufweist.

11. Waffelformkörper nach Anspruch 9 oder 10, **dadurch gekennzeichnet, dass** die Rippe (22) in der Fläche der Verbindungslamelle (23) verläuft.

12. Waffelformkörper nach einem der Ansprüche 9 bis 11, **dadurch gekennzeichnet, dass** mehrere Rippen (22) vorgesehen sind, die im Wesentlichen regelmäßig am Umfang des Backproduktes (20) verteilt in das Backprodukt (20) münden.

13. Waffelformkörper nach einem der Ansprüche 9 bis 12, **dadurch gekennzeichnet, dass** eine das Backprodukt (20) umgebenden Sollbruchlinie (18) vorgesehen ist, die eine geringere Dicke aufweist als das Backprodukt (20).

14. Waffelformkörper nach einem der Ansprüche 9 bis 13, **dadurch gekennzeichnet, dass** mehrere Backprodukte (20) vorgesehen sind, die durch den Backzusammenhang (19) miteinander verbunden sind.

15. Waffelformkörper nach einem der Ansprüche 9 bis 14, **dadurch gekennzeichnet, dass** zumindest eine Rippe (22) vorgesehen ist, die zwei Backprodukte (20) miteinander verbindet.

16. Waffelformkörper nach einem der Ansprüche 9 bis 15, **dadurch gekennzeichnet, dass** die Bereiche geringerer Dicke wie insbesondere die Verbindungslamelle (23) und/oder die Sollbruchlinie (18) einen höheren Ausbackgrad aufweisen als das Backprodukt (20), und insbesondere überbacken sind, und dass die Bereiche mit höherem Ausbackgrad spröder sind als das Backprodukt (20).

17. **Backofen** zum Herstellen von vorzugsweise knusprig-spröden gebackenen Waffelformkörpern, wobei der Backofen einen Backraum (27) und eine im Backofen kontinuierlich umlaufende und sich durch den Backraum (27) bewegende, endlose Backzangenkette (28) besitzt, die längs einer in sich geschlossenen Umlaufbahn angeordnet ist, die sich in zwei übereinander angeordneten Transportebenen (29,30) erstreckt, wobei die Backzangenkette (28) auf- und zuklappbare und im geschlossenen Zustand verriegelbare Backzangen (1) enthält, in denen aus Backformoberteilen und Backformunterteilen bestehende Backformen angeordnet sind, die durch Aufklappen der Backzangen (1) geöffnet und durch Zuklappen der Backzangen (1) geschlossen werden, wobei eine Einrichtung (32) zum Aufklappen der Backzangen (1), eine Ausgabestation (33), eine Beschickungsstation (34), eine Einrichtung (35) zum Zuklappen der Backzangen (1) und eine Verriegelungsvorrichtung (36) zur Verriegelung der Backzangen (1) im geschlossenen Zustand in Laufrichtung der Backzangen (1) hintereinander angeordnet sind, wobei in der Ausgabestation (33) eine die gebackenen Waffelformkörper aus den aufgeklappten Backzangen (1) entnehmende Produktabnahmevorrichtung (37) vorgesehen ist, **dadurch gekennzeichnet, dass** die Backzange (1) als Backplattenvorrichtung nach einem der vorangegangenen Ansprüche ausgeführt ist.

18. **Verfahren** zur Herstellung von knusprig-spröden gebackenen Produkten umfassend folgende Schritte:
a. Dosieren von Waffelbackmassen insbesondere im Linienaufguss oder mit zentral orientierten Punktaufgüssen in die Backform einer Backplattenvorrichtung nach einem der vorangegangenen Ansprüche eines Backofens nach einem der vorangegangenen Ansprüche,
b. Backen und Entformen der Waffelformkörper nach einem der Ansprüche 9 bis 16 durch insbesondere Ausblasen und Herausführen oder Vakuumabnahmeverfahren,
c. Trennen des Backproduktes von dem Backzusammenhang entlang der Sollbruchlinie.

19. Verfahren nach Anspruch 18, **dadurch gekennzeichnet, dass** der Waffelformkörper zur Trennung des Backproduktes von dem Backzusammenhang
a. einer Trennvorrichtung zugeführt wird, die eine Trennform umfasst, die den Waffelformkörper zumindest im Bereich der Sollbruchlinien berührt,
b. und dass anschließend die Backprodukte von einem oder mehreren Stempeln, die eine Relativbewegung zwischen Backprodukt und Backzusammenhang bewirken, getrennt werden.

## Claims

1. A baking plate apparatus, namely a baking tong (1) comprising a baking plate pair for producing shaped wafer bodies (2) baked under pressure, such as brittle flat wafers or hollow wafers, from a wafer batter, comprising:
- a first baking plate (3) having a first baking surface (4),
- a second baking plate (5) having a second baking surface (6),
- a movement apparatus (7) by which the first baking plate (3) is connected to the second baking plate (5) in an openable and closable manner,
- a locking apparatus (9) for locking the first baking plate (3) to the second baking plate (5) in the closed position,
wherein in the closed position a baking mould (8) is formed by the first baking surface (4) and the second baking surface (6), said baking mould substantially corresponding to the negative shape of the shaped wafer body (2),
and wherein the baking mould (8) comprises a product space (10) having a product thickness (11),
said product space being surrounded by a gap section (12) having a gap thickness (13), wherein the gap thickness (13) is smaller than the product thickness (11),
**characterised**
**in that** at least one channel (14) having a channel thickness (15) is provided for the removal of steam, said channel penetrating the gap section (12), wherein the channel thickness (15) is larger than the gap thickness (13).

2. The baking plate apparatus according to claim 1, **characterised in that** the channel (14) extends from the product space (10) to the outer face (16) of the baking plate (3, 4) or the baking plate pair and as a result opens the product space (10) outwardly.

3. The baking plate apparatus according to claim 1 or 2, **characterised in that** two or more product spaces (10) are provided and **in that** the channel (14) extends from one product space (10) to a further product space (10) and as a result connects two product spaces (10) together,
and/or **in that** a plurality of channels (14) lead into a product space (10)
and/or **in that** a plurality of channels (14) lead into the product space (10), said channels being distributed substantially uniformly on the periphery of the product space (10).

4. The baking plate apparatus according to one of claims 1 to 3, **characterised in that** the channel (14) penetrates the gap section (12) along the first baking surface (4) and/or along the second baking surface (6), or **in that** the channel (14) is provided as a linear engraving in one or in both baking surfaces (4, 6), wherein the linear engraving intersects at least one gap section (12) .

5. The baking plate apparatus according to one of claims 1 to 4, **characterised in that** the gap section (12) has a gap thickness (13) which is less than 50 % of the product thickness (11), preferably less than 30 % of the product thickness (11) and/or **in that** the gap thickness (13) is zero at least in some sections.

6. The baking plate apparatus according to one of claims 1 to 5, **characterised in that** the gap section (12) extends in a planar manner between the product spaces (10) and/or between one product space (10) and the outer face (16) of the baking plate pair.

7. The baking plate apparatus according to one of claims 1 to 6, **characterised in that** the channels (14) extend obliquely to one another, so that the baked shaped wafer body (2) has a stable structure.

8. The baking plate apparatus according to one of claims 1 to 7, **characterised in that** a substantially closed ridge (17) constricting the product space is provided in the product space (10), so that the baked shaped wafer body (2) has a predetermined breaking line (18) for separating the baked product (20) from the baking linkage (19) .

9. A shaped wafer body (2), in particular a baked intermediate product, consisting of a baking mass which is baked under pressure and which contains 55 - 70 % water in the unbaked state, comprising a baked product (20) having a baked product thickness (21) which is surrounded by a baking linkage (19),
**characterised**
**in that** the baking linkage (19) comprises at least one rib (22) which extends to the edge of the baked product (20) and in that the rib (22) extends from the baked product (20) to the edge (24) of the wafer body, and in that the shaped wafer body (2) is produced by a baking plate apparatus according to one of claims 1 to 8.

10. The shaped wafer body according to claim 9, **characterised in that** the baking linkage (19) comprises a connecting lamella (23) having a lamella thickness (24),
**in that** the lamella thickness (24) is at least 50 % smaller than the baked product thickness (21), preferably at least 70 % smaller than the baked product thickness (21) or optionally zero at least in some sections,
and/or **in that** the baked product (20) comprises a baked product thickness (21) of approximately 0.5 mm to 5 mm, wherein the continuous core region (26) has a thickness of approximately 0.5 mm to 2 mm.

11. The shaped wafer body according to claim 9 or 10, **characterised in that** the rib (22) extends in the surface of the connecting lamella (23).

12. The shaped wafer body according to one of claims 9 to 11, **characterised in that** a plurality of ribs (22) are provided, said ribs being distributed substantially uniformly on the periphery of the baked product (20) and leading into the baked product (20).

13. The shaped wafer body according to one of claims 9 to 12, **characterised in that** a predetermined breaking line (18) which surrounds the baked product (20) and which has a smaller thickness than the baked product (20) is provided.

14. The shaped wafer body according to one of claims 9 to 13, **characterised in that** a plurality of baked products (20) which are connected together by the baking linkage (19) are provided.

15. The shaped wafer body according to one of claims 9 to 14, **characterised in that** at least one rib (22) which connects together two baked products (20) is provided.

16. The shaped wafer body according to one of claims 9 to 15, **characterised in that** the regions of smaller thickness, such as in particular the connecting lamella (23) and/or the predetermined breaking line (18), have a greater degree of baking than the baked product (20) and, in particular, are overbaked, and **in that** the regions with the greater degree of baking are more brittle than the baked product (20).

17. A baking oven for producing preferably crispy-brittle baked shaped wafer bodies, wherein the baking oven comprises a baking chamber (27) and an endless baking tong chain (28), continuously circulating in the baking oven and moving through the baking chamber (27), which is arranged along a circulating path which is closed in itself and which extends in two transport planes (29, 30) arranged one above the other, wherein the baking tong chain (28) contains openable and closable baking tongs (1) which are lockable in the closed state, baking moulds consisting of baking mould upper parts and baking mould lower parts being arranged therein, said baking moulds being opened by opening said baking tongs (1) and being closed by closing said baking tongs (1), wherein a device (32) for opening the baking tongs (1), a discharge station (33), a feeding station (34), a device (35) for closing the baking tongs (1) and a locking apparatus (36) for locking the baking tongs (1) in the closed state are arranged one behind the other in the running direction of the baking tongs (1), wherein a product removal apparatus (37) removing the baked shaped wafer bodies from the opened baking tongs (1) is provided in the discharge station (33), **characterised in that** the baking tong (1) is designed as a baking plate apparatus according to one of the preceding claims.

18. A method for producing crispy-brittle baked products comprising the following steps:
a. metering wafer baking masses, in particular via linear pouring or via centrally oriented point pouring, into the baking mould of a baking plate apparatus, according to one of the preceding claims, of a baking oven according to one of the preceding claims,
b. baking and unmoulding the shaped wafer bodies according to one of claims 9 to 16, by in particular blowing out and removing or by a vacuum removal method,
c. separating the baked product from the baking connection along the predetermined breaking line.

19. The method according to claim 18, **characterised in that** for separating the baked product from the baking connection, the shaped wafer body
a. is supplied to a separating apparatus which comprises a separating mould, which comes into contact with the shaped wafer bodies at least in the region of the predetermined breaking lines,
b. and **in that** subsequently the baked products are separated by one or more punches which bring about a relative movement between the baked product and the baking linkage.

## Revendications

1. Dispositif à plaques de cuisson, notamment pince de cuisson (1) avec une paire de plaques de cuisson, pour la fabrication sous pression de corps moulés de gaufrette cuits (2), comme des gaufrettes plates ou gaufrettes creuses friables, à partir d'une pâte à gaufrettes comprenant :
- une première plaque de cuisson (3) avec une première surface de cuisson (4),
- une deuxième plaque de cuisson (5) avec une deuxième surface de cuisson (6),
- un dispositif de déplacement (7), par le biais duquel la première plaque de cuisson (3) est reliée à la deuxième plaque de cuisson (5) pouvant s'ouvrir et se fermer,
- un dispositif de verrouillage (9) pour verrouiller la première plaque de cuisson (3) à la deuxième plaque de cuisson (5) en position fermée,
en position fermée un moule de cuisson (8) étant formé par la première surface de cuisson (4) et la deuxième surface de cuisson (6), qui correspond pour l'essentiel à la forme négative du corps moulé de gaufrette (2),
et le moule de cuisson (8) comprenant un espace de produit (10) avec une épaisseur de produit (11),
qui est entouré par une section interstitielle (12) avec une épaisseur d'interstice (13), l'épaisseur d'interstice (13) étant plus petite que l'épaisseur de produit (11),
**caractérisé en ce**
**qu'**au moins un conduit (14) est prévu avec une épaisseur de conduit (15) pour dérivation de la vapeur, qui traverse la section interstitielle (12), l'épaisseur de conduit (15) étant plus grande que l'épaisseur d'interstice (13).

2. Dispositif à plaques de cuisson selon la revendication 1, **caractérisé en ce que** le conduit (14) s'étend de l'espace de produit (10) jusqu'au côté extérieur (16) de la plaque de cuisson (3, 4) ou de la paire de plaques de cuisson et ouvre de ce fait l'espace produit (10) vers l'extérieur.

3. Dispositif à plaques de cuisson selon la revendication 1 ou 2, **caractérisé en ce que** deux espaces de produit (10) ou plus sont prévus et **en ce que** le conduit (14) s'étend d'un espace de produit (10) à un autre espace de produit (10) et relie de ce fait deux espaces de produit (10) entre eux,
et/ou **en ce que** plusieurs conduits (14) débouchent dans un espace de produit (10),
et/ou **en ce que** plusieurs conduits (14) débouchent dans l'espace de produit (10) pour l'essentiel régulièrement répartis sur la périphérie de l'espace de produit (10).

4. Dispositif à plaques de cuisson selon l'une quelconque des revendications 1 à 3, **caractérisé en ce que** le conduit (14) traverse la section interstitielle (12) le long de la première surface de cuisson (4) et/ou le long de la deuxième surface de cuisson (6) ou **en ce que** le conduit (14) est prévu en tant que gravure en forme de lignes dans une ou dans les deux surfaces de cuisson (4, 6), la gravure en forme de lignes croisant au moins une section interstitielle (12).

5. Dispositif à plaques de cuisson selon l'une quelconque des revendications 1 à 4, **caractérisé en ce que** la section interstitielle (12) comporte une épaisseur d'interstice (13) qui représente moins de 50 % de l'épaisseur de produit (11), de préférence moins de 30 % de l'épaisseur de produit (11), et/ou **en ce que** l'épaisseur d'interstice (13) est au moins par section de zéro.

6. Dispositif à plaques de cuisson selon l'une quelconque des revendications 1 à 5, **caractérisé en ce que** la section interstitielle (12) s'étend sur toute la surface entre les espaces de produit (10) et/ou entre un espace de produit (10) et le côté extérieur (16) de la paire de plaques de cuisson.

7. Dispositif à plaques de cuisson selon l'une quelconque des revendications 1 à 6, **caractérisé en ce que** les conduits (14) passent en biais l'un par rapport à l'autre de telle sorte que le corps moulé de gaufrette cuit (2) présente une structure stable.

8. Dispositif à plaques de cuisson selon l'une quelconque des revendications 1 à 7, **caractérisé en ce que** dans l'espace de produit (10) un peigne (17) pour l'essentiel fermé rétrécissant l'espace de produit est prévu de telle sorte que le corps moulé de gaufrette cuit (2) comporte une ligne de rupture théorique (18) pour la séparation du produit de cuisson (20) de la suspension de cuisson (19).

9. Corps moulé de gaufrette (2), notamment produit intermédiaire de cuisson, à partir d'une masse de cuisson cuite sous pression contenant à l'état non cuit 55 - 70 % d'eau, comprenant un produit de cuisson (20) avec une épaisseur de produit de cuisson (21), qui est entourée par une suspension de cuisson (19),
**caractérisé en ce**
**que** la suspension de cuisson (19) comprend au moins une nervure (22) qui s'étend jusqu'au bord du produit de cuisson (20) et **en ce que** la nervure (22) s'étend du produit de cuisson (20) jusque sur le bord (24) du corps de gaufrette et **en ce que** le corps moulé de gaufrette (2) est réalisé par un dispositif à plaques de cuisson selon l'une quelconque des revendications 1 à 8.

10. Corps moulé de gaufrette selon la revendication 9, **caractérisé en ce que** la suspension de cuisson (19) comprend une lamelle de liaison (23) avec une épaisseur de lamelle (24),
**en ce que** l'épaisseur de lamelle (24) est au moins 50 % plus petite que l'épaisseur de produit de cuisson (21), est de préférence au moins 70% plus petite que l'épaisseur de produit de cuisson (21) ou le cas échéant est de zéro au moins par sections,
et/ou **en ce que** le produit de cuisson (20) comporte une épaisseur de produit de cuisson (21) d'environ 0,5 mm à 5 mm, la zone centrale (26) continue comportant une épaisseur d'environ 0,5 mm à 2 mm.

11. Corps moulé de gaufrette selon la revendication 9 ou 10, **caractérisé en ce que** la nervure (22) passe dans la surface de la lamelle de liaison (23).

12. Corps moulé de gaufrette selon l'une quelconque des revendications 9 à 11, **caractérisé en ce que** plusieurs nervures (22) sont prévues, qui débouchent dans le produit de cuisson (20) pour l'essentiel régulièrement réparties sur la périphérie du produit de cuisson (20).

13. Corps moulé de gaufrette selon l'une quelconque des revendications 9 à 12, **caractérisé en ce qu'**une ligne de rupture théorique (18) entourant le produit de cuisson (20) est prévue qui comporte une épaisseur plus faible que le produit de cuisson (20).

14. Corps moulé de gaufrette selon l'une quelconque des revendications 9 à 13, **caractérisé en ce que** plusieurs produits de cuisson (20) sont prévus qui sont reliés entre eux par la suspension de cuisson (19) .

15. Corps moulé de gaufrette selon l'une quelconque des revendications 9 à 14, **caractérisé en ce qu'**au moins une nervure (22) est prévue qui relie deux produits de cuisson (20) entre eux.

16. Corps moulé de gaufrette selon l'une quelconque des revendications 9 à 15, **caractérisé en ce que** les zones d'épaisseur plus faible comme notamment la lamelle de liaison (23) et/ou la ligne de rupture théorique (18) comportent un degré de cuisson plus élevé que le produit de cuisson (20) et sont notamment en particulier gratinées et **en ce que** les zones avec un degré de cuisson plus élevé sont plus friables que le produit de cuisson (20) .

17. Four de cuisson pour la fabrication de corps moulés de gaufrettes cuits croustillants friables, le four de cuisson possédant un espace de cuisson (27) et une chaîne à pinces de cuisson (28) circulant en continu dans le four de cuisson et se déplaçant à travers l'espace de cuisson (27), qui est disposé le long d'une voie de circulation en circuit fermé qui s'étend dans deux plans de transport (29, 30) disposés l'un sur l'autre, la chaîne de pinces de cuisson (28) contenant des pinces de cuisson (1) dépliables et rabattables et verrouillables à l'état fermé dans lesquelles sont disposés des moules de cuisson composés de parties supérieures de moule de cuisson et de parties inférieures de moule de cuisson, qui sont ouvertes par dépliage des pinces de cuisson (1) et fermées par rabattement des pinces de cuisson (1), un dispositif (32) pour déplier les pinces de cuisson (1), un poste de distribution (33), un poste de chargement (34), un dispositif (35) pour rabattre les pinces de cuisson (1) et un dispositif de verrouillage (36) pour verrouiller les pinces de cuisson (1) étant disposés à l'état fermé l'un derrière l'autre dans le sens de la marche des pinces de cuisson (1), dans le poste de distribution (33) un dispositif d'enlèvement de produit (37) prélevant les corps moulés de gaufrettes cuits des pinces de cuisson dépliées (1) étant prévu **caractérisé en ce que** la pince de cuisson (1) est exécutée comme un dispositif à plaques de cuisson selon l'une quelconque des revendications précédentes.

18. Procédé pour la fabrication de produits cuits croustillants friables comprenant les étapes suivantes :
a. dosage de masses de cuisson de gaufrettes, notamment en versements à délivrer en lignes ou versements à délivrer par points avec orientation centrale dans le moule de cuisson d'un dispositif à plaques de cuisson selon l'une quelconque des revendications précédentes d'un four de cuisson selon l'une quelconque des revendications précédentes,
b. cuisson et démoulage des corps moulés de gaufrettes selon l'une quelconque des revendications 9 à 16 notamment par soufflage et extraction ou procédé d'enlèvement sous vide,
c. séparation du produit de cuisson de la suspension de cuisson le long de la ligne de rupture théorique.

19. Procédé selon la revendication 18, **caractérisé en ce que** le corps moulé de gaufrette
a. est acheminé pour la séparation du produit de cuisson de la suspension de cuisson à un dispositif de séparation qui comprend un moule de séparation qui touche le corps moulé de gaufrette au moins dans la zone des lignes de rupture théoriques,
b. et **en ce qu'**ensuite les produits de cuisson sont séparés d'une ou de plusieurs empreintes, qui causent un mouvement relatif entre le produit de cuisson et la suspension de cuisson.
